# EUROPEAN PATENT APPLICATION

(11) **EP 4 831 922 A1**
(43) Date of publication of application: **28.10.2026**
(21) Application number: 24933838.5
(22) Date of filing: 10.12.2024
(51) Int. Cl.: G06T 11/00, G06T 15/00

(54) **IMAGE PROCESSING METHOD AND APPARATUS**

(30) Priority: 03.04.2024 CN 202410405293
(71) Applicant: Huawei Technologies Co., Ltd., Shenzhen, Guangdong 518129 (CN)
(72) Inventor: PENG, Guanqi, Shenzhen, Guangdong 518129 (CN); YANG, Xueguo, Kunming, Yunnan 650504 (CN); LIN, Haoye, Shenzhen, Guangdong 518129 (CN); SHAO, Jicheng, Shenzhen, Guangdong 518129 (CN); DING, Zeqi, Shenzhen, Guangdong 518129 (CN)
(74) Representative: Huawei European IPR
(86) International application number: PCT/CN2024/138247
(87) International publication number: WO 2025/208914

(57) **Abstract**

An image processing method and an apparatus are disclosed, and relate to the field of image processing technologies. The method includes: An electronic device receives first information, where the first information indicates a painting style and/or a material type of a painting carrier; and the electronic device determines, based on the first information, one or more texture images corresponding to the painting style and/or the material type, and performs texture rendering on a first image based on the one or more texture images, to obtain and display a second image. The one or more texture images are obtained based on a texture of a same painting carrier, and different texture images in the plurality of texture images present different features of the texture of the same painting carrier.

## Description

### CROSS-REFERENCE TO RELATED APPLICATIONS

This application claims priority to Chinese Patent Application No. 202410405293.5, filed with the China National Intellectual Property Administration on April 3, 2024 and entitled "IMAGE PROCESSING METHOD AND APPARATUS", which is incorporated herein by reference in its entirety.

### TECHNICAL FIELD

This application relates to the field of image processing technologies, and in particular, to an image processing method and an apparatus.

### BACKGROUND

Image processing applications are widely used in business (such as print advertisement), artistic creation (such as illustration design), personal entertainment, and the like. As users have higher requirements on painting styles and painting effects, the users have higher requirements on image processing functions of the image processing applications.

Currently, in a scenario in which the user uses an electronic device (for example, a tablet computer or a personal computer) to paint, an image processing application is used to overlay and blend, with a background color, images painted by the user on different layers, to implement a final painting effect.

Painting effects of styles such as watercolor, ink wash, and oil painting are closely related to textures of painting materials. How to make a painting effect of a painting work created by using the image processing application realistic is a problem that needs to be resolved currently.

### SUMMARY

Embodiments of this application provide an image processing method and an apparatus, to implement texture effect processing on an image, thereby improving a realism level of a painting effect.

Embodiments of this application may be applied to an electronic device. The electronic device may be a terminal device, for example, a portable terminal device (for example, a mobile phone, a tablet computer, a notebook computer, a personal computer, an ultra-mobile PC (ultra-mobile personal computer, UMPC), or a netbook), a wearable device (for example, a watch), a vehicle-mounted terminal device, an augmented reality (augmented reality, AR)/virtual reality (virtual reality, VR) device, a personal digital assistant (personal digital assistant, PDA), or a smart home device (for example, a smart television).

According to a first aspect, an image processing method is provided. The method is applied to an electronic device. The method includes: receiving first information, where the first information indicates a painting style and/or a material type of a painting carrier; determining one or more corresponding texture images based on the first information, where the one or more texture images are obtained based on a texture of a same painting carrier, and the one or more texture images present the texture of the same painting carrier; performing texture rendering on a first image based on the one or more texture images, to obtain a second image; and displaying the second image, or sending the second image to a terminal device connected to the electronic device.

In the foregoing implementation, a plurality of texture images may be obtained based on the texture of the same painting carrier, to present features of the texture from different aspects or angles. In this way, the plurality of texture images are combined in different manners, and then are used to perform texture rendering on an image, to obtain images with different painting effects. Based on the foregoing principle, a correspondence between a painting style and a texture image may be established in advance, so that texture rendering may be performed on an image of a user by using a corresponding texture image based on a painting style selected by the user, to obtain an image of a corresponding painting style. This improves a realism level of a painting effect.

In a possible implementation, receiving the first information includes: receiving a first user operation, and obtaining the first information based on the first user operation, where the first user operation is used to request to perform texture rendering on a currently painted image based on the first information in an image painting process; or receiving a second user operation, and obtaining the first information based on the second user operation, where the second user operation is used to request to perform texture rendering on the first image based on the first information, and the first image is a to-be-edited image; or receiving a third user operation, and obtaining the first information based on the third user operation, where the third user operation is used to pause image painting and request to perform texture rendering on a currently painting-paused image based on the first information.

In a possible implementation, receiving the first user operation, and obtaining the first information based on the first user operation includes: receiving a user operation of triggering a painting creation function option, or receiving a user operation of triggering a texture setting function option; displaying option information of the painting style and/or the material type of the painting carrier in response to the received user operation; and obtaining the first information based on a received user operation used to select the option information.

In a possible implementation, receiving the second user operation, and obtaining the first information based on the second user operation includes: receiving a user operation of triggering a function option for editing the first image; displaying option information of the painting style and/or the material type of the painting carrier in response to the received user operation; and obtaining the first information based on a received user operation used to select the option information.

In a possible implementation, receiving the third user operation, and obtaining the first information based on the third user operation includes: receiving a user operation of triggering a function option for previewing a current image; pausing, in response to the received user operation, responding to a user operation of painting the current image, and displaying option information of the painting style and/or the material type of the painting carrier; and obtaining the first information based on a received user operation used to select the option information.

In a possible implementation, after performing texture rendering on the currently painting-paused image, the method further includes: receiving a fourth user operation, where the fourth user operation is used to cancel texture rendering on an image obtained through texture rendering and restore image painting.

In a possible implementation, the method further includes: receiving a fifth user operation, and obtaining, based on the fifth user operation, texture feature information set by the user, where the texture feature information indicates texture granularity densities and/or a texture granularity size; and if the texture feature information set by the user is not equal to texture feature information of the one or more texture images corresponding to the first information, adjusting, based on the texture feature information set by the user, sizes of the one or more texture images corresponding to the first information.

In the foregoing implementation, a texture image may be adaptively adjusted based on the texture feature information set by the user, so that texture feature information of the texture image meets a requirement of the user, and an image obtained through texture rendering is performed based on the texture image can obtain a visual effect required by the user.

In a possible implementation, receiving the fifth user operation, and obtaining, based on the fifth user operation, the texture feature information set by the user includes: receiving a user operation performed on a slider of a slider control; and determining, based on a location of the slider on the slider control, the texture feature information set by the user.

In a possible implementation, different texture images obtained based on the texture of the same painting carrier present different texture features of the same painting carrier, and the texture feature includes one or more of the following: a texture shape, a texture size, a texture depth, a dark part contour feature, a bright part contour feature, a light color contour feature, or an effect presented based on a pigment adsorption capability.

In a possible implementation, the different texture images obtained based on the texture of the same painting carrier are obtained by blending a background image and an image that is based on the texture of the same painting carrier.

In a possible implementation, the image of the texture of the same painting carrier and the background image are blended in one of the following blending modes: a dark color mode, a color screening mode, a light color mode, a color burn blending mode, or a multiply blending mode.

In a possible implementation, the one or more texture images include one or more of the following: a texture layer image, presenting the texture shape, the texture size, and the texture depth under a diffuse light condition; a gloss layer image, presenting a texture contour under a specific-direction light condition, where a dark part contour is eliminated and a bright part contour is highlighted in the texture contour; a gloss absorption layer image, presenting the texture contour under the specific-direction light condition, where a dark color part is eliminated and a light color part is highlighted in the texture contour; and a color deposition layer image, presenting the effect presented based on the pigment adsorption capability; or a shadow layer image, presenting the texture contour under the specific-direction light condition, where the bright part contour is eliminated and the dark part contour is highlighted in the texture contour.

In a possible implementation, the texture layer image is obtained by processing a third image and a background image in a first blending mode; or the gloss layer image is obtained by processing a fourth image and the background image in a second blending mode; or the gloss absorption layer image is obtained by processing the fourth image and the background image in a third blending mode; or the color deposition layer image is obtained by processing a fifth image and the background image in a fourth blending mode; or the shadow layer image is obtained by processing the fourth image and the background image in a fifth blending mode, where the third image is an image of the texture of the same painting carrier under the diffuse light condition, the fourth image is an image of the texture of the same painting carrier under the specific-direction light condition, and the fifth image is an image of a texture of the same painting carrier after being dyed.

In a possible implementation, the first blending mode is the dark color mode, or the second blending mode is the color screening mode, or the third blending mode is the light color mode, or the fourth blending mode is the color burn blending mode, or the fifth blending mode is the multiply blending mode.

In a possible implementation, determining the one or more corresponding texture images based on the first information includes: determining, based on the painting style indicated by the first information and a first correspondence, one or more texture images corresponding to the painting style; or determining, based on the material type indicated by the first information and a second correspondence, all texture images corresponding to the material type; or determining, based on the painting style and the material type indicated by the first information, and a third correspondence, one or more texture images corresponding to the painting style and the material type, where the first correspondence includes a correspondence between a painting style type and a texture image, the second correspondence includes a correspondence between a material type and a texture image, and the third correspondence includes a correspondence of a painting style type and a material type to a texture image.

In a possible implementation, the first information further indicates the texture feature information, and the texture feature information indicates the texture granularity density and/or the texture granularity size; and determining the one or more texture images based on the first information includes: determining, based on the first information, one or more texture images that match the texture feature information from the one or more texture images corresponding to the painting style and/or the material type.

In a possible implementation, before performing texture rendering on the first image based on the one or more texture images, the method further includes: if sizes of the one or more texture images are less than a size of the first image, performing the following processing operations on each of the one or more texture images: copying the texture image, splicing a plurality of texture images obtained through copying, and cropping a spliced texture image to be equal to the size of the first image; or if the sizes of the one or more texture images are greater than the size of the first image, performing the following processing operation on each of the one or more texture images: cropping the texture image to be equal to the size of the first image.

In a possible implementation, performing texture rendering on the first image based on the one or more texture images, to obtain the second image includes: processing values of pixels at same locations in the one or more texture images and the first image in a specified blending mode, to obtain a value of a pixel at a same location in the second image.

In a possible implementation, the blending mode is associated with the painting style indicated by the first information, or the blending mode is associated with the material type indicated by the first information.

Optionally, the blending mode includes one of the following: a darkening mode (Darken), a multiply mode (Multiply), a color burn mode (Color Burn), a linear burn mode (Linear Burn), a dark color mode (Dark Color), an addition mode (Add), a lightening mode (Lighten), a color screening mode (Screen), a color dodge mode (Color Dodge), a linear dodge mode (Linear Dodge), a light color mode (Lighter Color), an overlay mode (Overlay), a soft light mode (Soft Light), a hard light mode (Hard Light), a vivid light mode (Vivid Light), a linear light mode (Linear Light), a pin light mode (Pin Light), a hard mix mode (Hard Mix), a difference mode (Difference), an exclusion mode (Exclusion), a subtraction mode (Subtract), and a division mode (Divide).

In a possible implementation, the first information further indicates the texture feature information, and the texture feature information indicates the texture granularity density and/or the texture granularity size. The method further includes: determining, based on the texture feature information indicated by the first information and a fourth correspondence, a brush parameter corresponding to the texture feature information, where the fourth correspondence includes a correspondence between texture feature information and a brush parameter; and setting a brush based on the brush parameter.

In a possible implementation, the brush parameter includes one or more of a brush shape and a brush material, and granularity fineness of the brush material is associated with texture granularity fineness corresponding to the texture feature information indicated by the first information.

In a possible implementation, the painting style includes one or more of the following: an ink wash painting style, a watercolor painting style, an oil painting style, or a printmaking style.

In a possible implementation, the material type of the painting carrier includes one or more of the following: paper, a canvas, or a painting board.

According to a second aspect, an apparatus is provided, including a unit or a module configured to perform the method according to any implementation of the first aspect.

According to a third aspect, an apparatus is provided, including one or more processors. The one or more processors are configured to perform the method according to any implementation of the first aspect.

According to a fourth aspect, a readable storage medium is provided. The readable storage medium includes a program. When the program is run on an apparatus, the apparatus is enabled to perform the method according to any implementation of the first aspect.

According to a fifth aspect, a chip system is provided. The chip system includes at least one chip and a memory. The at least one chip is configured to read and execute a program stored in the memory, to implement the method according to any implementation of the first aspect.

According to a sixth aspect, a computer program product is provided. The computer program product includes a computer program. When the computer program is executed by a processor, the method according to any implementation of the first aspect is implemented.

### BRIEF DESCRIPTION OF DRAWINGS

FIG. 1a, FIG. 1b, and FIG. 1c are each a diagram of an application scenario according to an embodiment of this application;
FIG. 2 is a diagram of a hardware structure of an electronic device according to an embodiment of this application;
FIG. 3 is a diagram of a software architecture of an electronic device according to an embodiment of this application;
FIG. 4 is a diagram of a texture image according to an embodiment of this application;
FIG. 5 is a diagram of a principle of an image processing method according to an embodiment of this application;
FIG. 6 is a diagram of a system architecture of an image processing application according to an embodiment of this application;
FIG. 7 is a schematic flowchart of an image processing method according to an embodiment of this application;
FIG. 8 is a diagram of an interface of an image processing application according to an embodiment of this application;
FIG. 9 is a schematic flowchart of another image processing method according to an embodiment of this application;
FIG. 10 is a schematic flowchart of other image processing according to an embodiment of this application; and
FIG. 11 is a comparison diagram of an image before texture rendering and an image obtained through texture rendering according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The terms "first" and "second" below in the descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more of the features.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item (piece) or any combination of a plurality of items (pieces). For example, at least one of a, b, or c may represent: a, b, c, a and b, a and c, b and c, or a, b and c, where a, b, and c may be a singular or plural number.

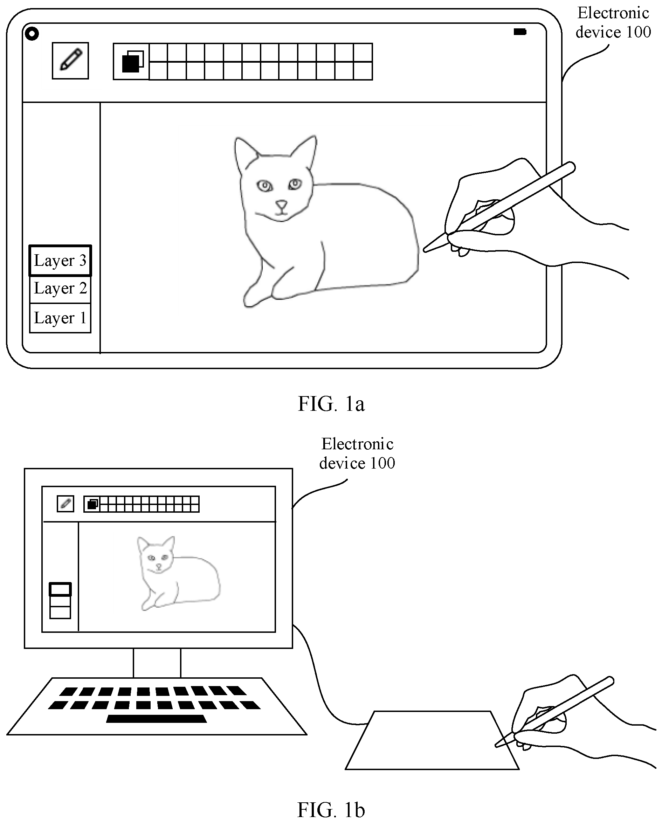

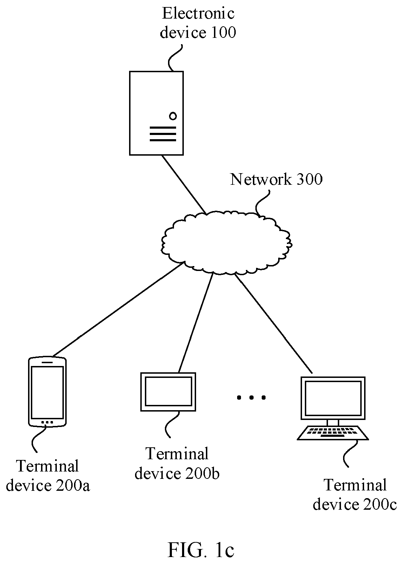

An image processing method provided in embodiments of this application is applicable to a scenario in which an electronic device is used for painting or image editing. The following describes an application scenario of embodiments of this application with reference to FIG. 1a, FIG. 1b, and FIG. 1c.

FIG. 1a is a diagram of an application scenario according to an embodiment of this application. An electronic device 100 has a display and a sensor that has a touch function or senses pressure, and may respond to a touch operation of a user or a touch operation of an electronic stylus (or referred to as an electronic painting pen). An image processing application is installed on the electronic device 100, and the image processing application has an image processing function provided in embodiments of this application. After the user starts the image processing application on the electronic device 100, the user may use the electronic painting pen or a finger to paint on a user interface of the image processing application, to obtain a painting work with a material texture effect. The user may also perform image editing on the painting work to obtain an image with the material texture effect.

FIG. 1b is a diagram of another application scenario according to an embodiment of this application. An electronic device 100 has a display, and the electronic device 100 is connected to an electronic handwriting board (or referred to as an electronic painting board) in a wired or wireless manner. After a user starts an image processing application, the user may use an electronic stylus to paint on the electronic handwriting board, and a corresponding image is displayed on the display of the electronic device 100, to obtain a painting work with a material texture effect.

In another possible scenario, an electronic device 100 (for example, a personal computer or a notebook computer) is connected to a mouse in a wired or wireless manner. After a user starts an image processing application, the user may use the mouse to paint, and a corresponding image is displayed on a display of the electronic device 100, to obtain a painting work with a material texture effect.

FIG. 1c is a diagram of another application scenario according to an embodiment of this application. The electronic device 100 may be connected to a plurality of terminal devices. A plurality of users may separately create or edit a same painting work on the plurality of terminal devices (for example, terminal devices 200a, 200b, and 200c in the figure). The electronic device 100 may perform corresponding image processing operations in response to operations of the users on the terminal devices, and send processed image data to the terminal devices, so that processed images can be synchronously displayed on the terminal devices, to implement distributed image processing. The electronic device 100 may generate an image with the material texture effect by using the method provided in embodiments of this application.

Optionally, the terminal device in FIG. 1c may be a portable terminal device (for example, a mobile phone, a tablet computer, a notebook computer, a personal computer (personal computer, PC), a UMPC, or a netbook), a wearable device (for example, a watch), a vehicle-mounted terminal device, an AR/VR device, a PDA, a smart home device (for example, a smart television), or the like.

Optionally, in the scenario shown in FIG. 1c, the electronic device 100 and the terminal devices (for example, the terminal devices 200a, 200b, and 200c in the figure) may be connected through a network 300. Optionally, the network 300 may be a local area network, or may be the Internet. This is not limited in this application.

The foregoing describes merely some possible application scenarios, and is not limited in this application.

In some embodiments of this application, the electronic device 100 may be a terminal device, for example, a portable terminal device (for example, a mobile phone, a tablet computer, a notebook computer, a personal computer, a UMPC, or a netbook), a wearable device (for example, a watch), a vehicle-mounted terminal device, an AR/VR device, a PDA, or a smart home device (for example, a smart television).

An example embodiment of the terminal device includes but is not limited to a terminal device using iOS^{®}, Android^{®}, Microsoft^{®}, HarmonyOS^{®}, or another operating system.

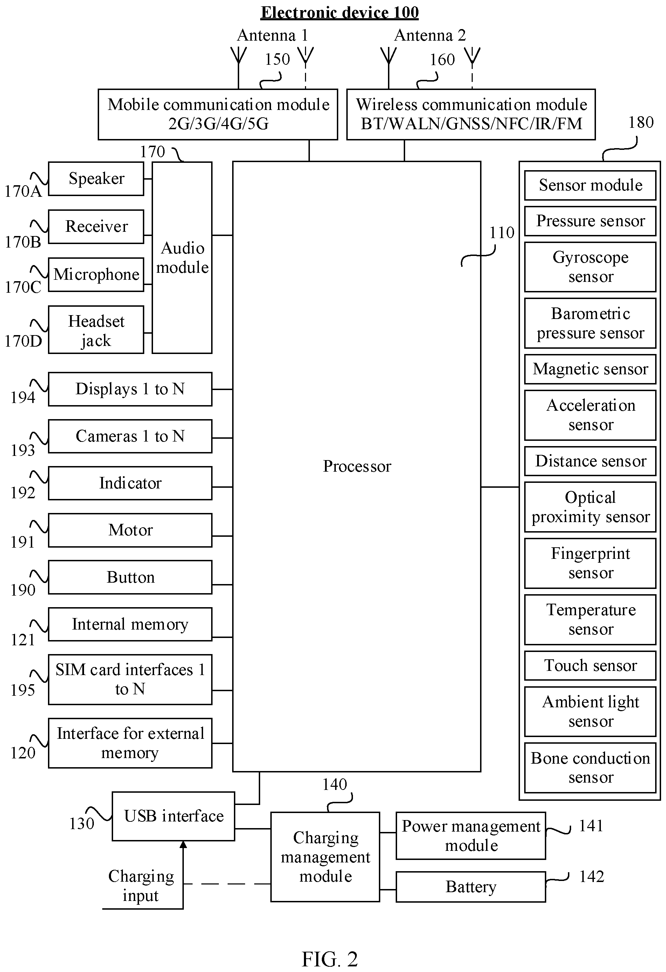

The following describes, with reference to FIG. 2, a hardware structure of an electronic device to which a method provided in embodiments of this application is applicable.

As shown in FIG. 2, an electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The sensor module 180 may include a gyroscope sensor, an acceleration sensor, an optical proximity sensor, a fingerprint sensor, a touch sensor, a temperature sensor, a pressure sensor, a distance sensor, a magnetic sensor, an ambient light sensor, a barometric pressure sensor, a bone conduction sensor, and the like.

It may be understood that the electronic device 100 shown in FIG. 2 is merely an example, and does not constitute a limitation on the electronic device. In addition, the electronic device may have more or fewer components than those shown in the figure, or may combine two or more components, or may have different component configurations. Various components shown in FIG. 2 may be implemented in hardware including one or more signal processing and/or application-specific integrated circuits, software, or a combination of hardware and software.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 100. The controller may generate an operation control signal based on instruction operation code and a time sequence signal, to complete control of instruction fetching and instruction execution.

The memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thus improving system efficiency.

Execution of the image processing method provided in embodiments of this application may be controlled by the processor 110 or completed by invoking another component, for example, invoking a processing program in this embodiment of this application stored in the internal memory 121, or invoking, by using the interface 120 for external memory, a processing program in this embodiment of this application stored in a third-party device, to control the wireless communication module 160 to perform data communication with another device, to implement intelligence and convenience of the electronic device 100, and improve user experience. The processor 110 may include different components. For example, when a CPU and a GPU are integrated, the CPU and the GPU may cooperate with each other to perform the image processing method provided in embodiments of this application. For example, in the image processing method, some algorithms are executed by the CPU, and another algorithm (for example, an algorithm for processing an image into an image with a material texture effect) is executed by the GPU, to obtain high processing efficiency.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. The display 194 may be configured to display information entered by the user or information provided for the user and various graphical user interfaces (graphical user interfaces, GUIs). For example, the display 194 may display a photo, a video, a web page, a file, or the like.

In this embodiment of this application, the display 194 may be an integrated flexible display, or may be a spliced display including two rigid screens and one flexible screen located between the two rigid screens.

The camera 193 (a front-facing camera, a rear-facing camera, or a camera that may serve as both a front-facing camera and a rear-facing camera) is configured to capture a static image or a video. Usually, the camera 193 may include a photosensitive element, for example, a lens group and an image sensor. The lens group includes a plurality of lenses (convex lens or concave lens), and is configured to: collect an optical signal reflected by a to-be-photographed object, and transfer the collected optical signal to the image sensor. The image sensor generates an original image of the to-be-photographed object based on the optical signal.

The internal memory 121 may be configured to store computer-executable program code. The executable program code includes instructions. The processor 110 runs the instructions stored in the internal memory 121 to perform various function applications of the electronic device 100 and data processing. The internal memory 121 may include a program storage area and a data storage area. The program storage area may store an operating system, code of an application (for example, a function corresponding to the solution of this application), and the like. The data storage area may store data created in a process of using the electronic device 100, and the like.

The internal memory 121 may further store one or more computer programs corresponding to the algorithms in the solutions of this application. The one or more computer programs are stored in the internal memory 121 and are configured to be executed by one or more processors 110. The one or more computer programs include instructions, and the instructions may be used to perform the steps in the following embodiments.

In addition, the internal memory 121 may include a high-speed random access memory, and may further include a nonvolatile memory, for example, at least one magnetic disk storage device, a flash memory device, or a universal flash storage (universal flash storage, UFS).

Certainly, code of the algorithms in the solutions of embodiments of this application may alternatively be stored in an external memory. In this case, the processor 110 may run, through the interface 120 for external memory, the code of the algorithms in the solutions of this application stored in the external memory.

The touch sensor is also referred to as a "touch panel". The touch sensor may be disposed on the display 194, and the touch sensor and the display 194 form a touchscreen, which is also referred to as a "touch screen". The touch sensor is configured to detect a touch operation performed on or near the touch sensor. The touch sensor may transfer the detected touch operation to the application processor, to determine a type of a touch event. The display 194 may provide visual output related to the touch operation. In some other embodiments, the touch sensor may alternatively be disposed on a surface of the electronic device 100, and is at a location different from that of the display 194.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes the 2nd generation (the 2nd generation, 2G), the 3rd generation (the 3rd generation, 3G), the 4th generation (the 4th generation, 4G), the 5th generation (the 5th generation, 5G), the 6th generation (the 6th generation, 6G), or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component with at least some modules of the processor 110. In this embodiment of this application, the mobile communication module 150 may be further configured to: exchange information with another device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio apparatus (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in the same component with the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrated into at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In embodiments of this application, the wireless communication module 160 may be configured to establish a connection to another electronic device, to exchange data. Alternatively, the wireless communication module 160 may be configured to access an access point device, send a control instruction to another electronic device, or receive data sent by another electronic device.

In addition, the electronic device 100 may implement an audio function, for example, music playing and recording, through the audio module 170, the speaker 170A, the receiver 170B, the microphone 170C, the headset jack 170D, the application processor, and the like. The electronic device 100 may receive an input of the button 190, and generate a button signal input related to a user setting and function control of the electronic device 100. The electronic device 100 may generate a vibration prompt (for example, an incoming call vibration prompt) by using the motor 191. The indicator 192 in the electronic device 100 may be an indicator light, and may indicate a charging status or a power change, or may indicate a message, a missed call, a notification, or the like. The SIM card interface 195 in the electronic device 100 is configured to connect to a SIM card. The SIM card may be inserted into the SIM card interface 195 or removed from the SIM card interface 195, to implement contact with or separation from the electronic device 100.

It should be understood that, in actual application, the electronic device 100 may include more or fewer components than those shown in FIG. 2. This is not limited in embodiments of this application. The electronic device 100 shown in the figure is merely an example, and the electronic device 100 may have more or fewer components than those shown in the figure, or may combine two or more components, or may have different component configurations. Various components shown in the figure may be implemented in hardware including one or more signal processing and/or application-specific integrated circuits, software, or a combination of hardware and software.

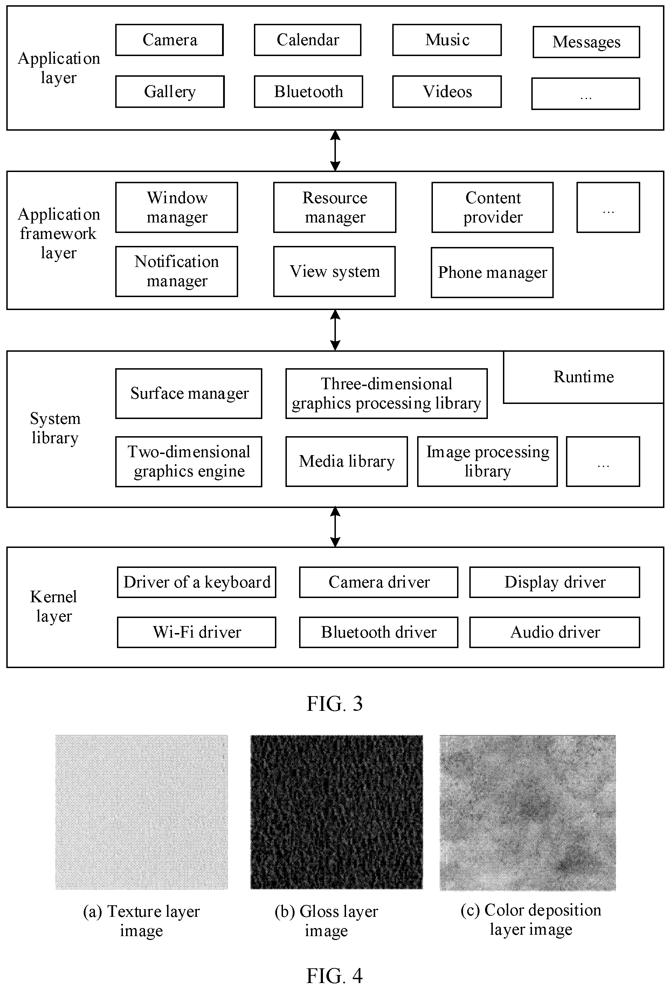

A software system of the electronic device 100 may use a layered architecture, an event-driven architecture, a microkernel architecture, a microservice architecture, or a cloud architecture. In the layered architecture, software is divided into several layers, and each layer has a clear role and task. The layers communicate with each other through a software interface. For example, as shown in FIG. 3, the software architecture may be divided into four layers: an application layer, an application framework (framework, FWK) layer, a runtime and system library, and a (Linux) kernel (kernel) layer from top to bottom.

The application layer is an uppermost layer of the operating system, includes a native application of the operating system, such as Camera, Gallery, Calendar, Bluetooth, Music, Videos, and Messages, and may further include a third-party application. An application program in embodiments of this application is briefly referred to as an application (application, APP), and is a software program that can implement one or more specific functions. Generally, a plurality of applications may be installed on the electronic device, for example, a camera application and an email application. An application mentioned below may be a system application installed when the electronic device is delivered from the factory, or may be a third-party application downloaded by a user from a network or obtained by the user from another electronic device during use of the electronic device.

Certainly, a developer may compile an application and install the application at the layer. In a possible implementation, the application may be developed by using a Java language, and is completed by invoking an application programming interface (application programming interface, API) provided by an application framework layer. A developer may interact with a bottom layer (for example, a kernel layer) of an operating system through an application framework, to develop an application of the developer.

The application framework layer is an API and a programming framework of the application layer. The application framework layer may include some predefined functions. The application framework layer may include a window manager, a content provider, a view system, a phone manager, a resource manager, a notification manager, and the like.

The window manager is configured to manage a window program. The window manager may obtain a display size, determine whether there is a status bar, lock a display (or a screen), take a screenshot, and the like.

The content provider is configured to: store and obtain data, and enable the data to be accessed by an application. The data may include information, for example, a file (for example, a document, a video, an image, or an audio) and a text.

The view system includes visual controls, for example, controls that display content, for example, texts, images, and documents. The view system may be configured to construct an application. An interface in a display window may include one or more views. For example, a display interface including an SMS message notification icon may include a text display view and an image display view.

The phone manager is configured to provide a communication function of the electronic device. The notification manager enables an application to display notification information in a status bar, and may be configured to transmit a notification-type message. The displayed information may automatically disappear after a short pause without user interaction.

A runtime includes a kernel library and a virtual machine. The runtime is responsible for scheduling and management of the system.

The kernel library of the system includes two parts: One is a function that needs to be invoked in Java language, and the other is the kernel library of the system. The application layer and the application framework layer run on the virtual machine. Java is used as an example. The virtual machine executes Java files of the application layer and the application framework layer as binary files. The virtual machine is configured to perform functions such as object lifecycle management, stack management, thread management, security and exception management, and garbage collection.

The system library may include a plurality of functional modules, for example, a surface manager, a media library, a three-dimensional graphics processing library (for example, OpenGL ES), a two-dimensional graphics engine (for example, SGL), and an image processing library. The surface manager is configured to manage a display subsystem and provide fusion of two-dimensional and three-dimensional graphics layers for a plurality of applications. The media library supports playback and recording in a plurality of commonly used audio and video formats, and static image files. The media library can support a plurality of audio and video coding formats, such as MPEG-4, H.564, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing.

The kernel layer provides a core system service of the operating system. For example, security, memory management, process management, a network protocol stack, and a driver model are all implemented based on the kernel layer. The kernel layer is also used as an abstraction layer between hardware and a software stack. The layer has many drivers related to the electronic device, mainly including a display driver, a driver of a keyboard used as an input device, a flash driver that is based on a memory technology device, a camera driver, an audio driver, a Bluetooth driver, a Wi-Fi driver, and the like.

It should be understood that the function service described above is merely an example. In actual application, the electronic device may alternatively be divided into more or fewer function services based on other factors, or may be divided into functions of each service in another manner, or may not be divided into function services, but works as a whole.

The image processing method provided in embodiments of this application may be applied to the architecture shown in FIG. 2 or FIG. 3. The image processing method provided in embodiments of this application may be used to perform texture rendering on an image, to generate an image with a material texture effect. This can improve a realism level of a painting effect.

The following first describes some terms in embodiments of this application.

### (1) Painting carrier and material type of the painting carrier

In a real scenario, a painting work is usually carried on a physical medium, and the painting carrier is the physical medium used to carry the painting work. For example, the painting carrier may include paper, cloth, a board, or the like. Generally, any physical medium on which painting can be performed may be referred to as a painting carrier.

The material type of the painting carrier is a material type of the physical medium that can carry the painting work. From a perspective of a large classification, the material type of the painting carrier may include paper, a canvas, a painting board, and the like. From a perspective of a finer classification, the material type of the painting carrier may include rice paper, watercolor paper, oil painting paper, an oil painting canvas, a painting panel, and the like. This is not limited in this application.

### (2) Texture of the painting carrier

In the real scenario, due to different material types or different manufacturing manners of the painting carrier, there is a grain on a surface of the painting carrier used to carry the painting work. For example, a surface of a wooden painting carrier presents a wood grain specific to the wood, and a surface of the oil painting canvas presents a fiber weave grain. Similarly, the paper also presents different grains on a surface of the paper due to different manufacturing materials and manufacturing methods of the paper. For example, a texture of the rice paper is finer than that of the oil painting paper.

The paper is used as an example. A texture of the paper may be usually described as a grain, which is a natural texture distribution feature of internal fibers of the paper. The texture usually is a natural pattern or texture on the surface of the paper, and the pattern or texture is formed by fibers or other materials in a paper manufacturing process. The grain usually is a line or stripe on the paper, and the line or stripe is usually formed by a mold or another processing device in the paper manufacturing process. Therefore, the texture and the grain of the paper may be used to describe features such as appearance, tactile quality, and overall quality of the paper.

The texture of the paper has a random distribution feature. Textures of different types of paper are different in one or more aspects such as texture brightness, texture glossiness, texture depth, texture size (for example, texture width), texture shape, texture direction, texture granularity density, and texture granularity fineness. The texture brightness, texture glossiness, texture depth, texture size (for example, texture width), texture shape, texture direction, texture granularity density, texture granularity fineness, and the like may be referred to as texture features.

The texture of the paper may also be referred to as a paper grain or PaperPrint.

### (3) Painting style

The painting style in embodiments of this application is classified from a perspective of a painting effect presented by a painting work, or is classified from a perspective of a visual effect of a painting work. The painting effect presented by the painting work is related to the material type of the painting carrier and a texture of the material type. For example, if the painting work is created on the oil painting canvas, the painting work may present the texture of the oil painting canvas, so that the painting work presents an oil painting visual effect.

In this way, in embodiments of this application, the painting style may include one or more of an ink wash painting style, a watercolor painting style, an oil painting style, a printmaking style, and the like.

It should be understood that, in an actual scenario, there may be more painting styles. Only several possible painting styles are listed as examples in embodiments of this application. This is not limited in this application.

In some embodiments of this application, one or more texture images may be obtained in advance, and the texture images are included in an installation package of the image processing application. When the image processing application is installed on the electronic device, the installation package of the image processing application is run on the electronic device, and the texture images in the installation package are stored in the electronic device. After the electronic device starts the image processing application, the texture image stored in the electronic device may be selected by the user, to add a texture effect to the painting work.

In some other embodiments of this application, an image processing application that can implement the method provided in embodiments of this application may be preset in the electronic device. In this case, a texture image required by the image processing application may be pre-stored in the electronic device.

Optionally, the texture image in embodiments of this application may be a binary image (Binary Image). The binary image is an image on which each pixel has only two possible values or grayscale levels. For example, a binary image is usually represented by a black and white or monochrome image.

A storage format of the texture image in embodiments of this application may be BMP, JPEG, PNG, TIFF, or the like. The storage format of the texture image is not limited in this application.

The following describes types of texture images in embodiments of this application.

In embodiments of this application, one or more texture images corresponding to a same painting carrier (for example, a same piece of paper) may be set for the painting carrier, and each texture image may present a texture of the painting carrier.

Optionally, different texture images corresponding to the same painting carrier present different texture features of the painting carrier, and the texture feature may include one or more of the following texture features: a texture shape, a texture size, a texture depth, a dark part contour feature, a bright part contour feature, a light color contour feature, or an effect presented based on a pigment adsorption capability.

The effect presented based on the color adsorption capability is related to depression of the texture. Paper is used as an example. After the paper is soaked in liquid (for example, water or liquid pigment), a depression phenomenon may occur in some areas. The depression phenomenon means that after the paper is dyed with the liquid, due to a difference in a texture or a material thickness, some areas are more likely to absorb water or water-based pigment than other areas, and consequently, color deposition (or a color depth) in the areas is higher than that in other areas.

In a possible implementation, the image of the texture of the same painting carrier and the background image may be blended in one of the following blending modes: a dark color mode, a color screening mode, a light color mode, a color burn blending mode, or a multiply blending mode. This is not limited in this application.

It can be learned that, that the plurality of texture images may present the texture of the same painting carrier may be understood as that the texture of the same painting carrier is presented from a plurality of different aspects. Each texture image may highlight features of the texture of the painting carrier in one or more aspects. For example, some texture images are used to highlight the texture shape, the texture size, and the texture depth, some texture images are used to highlight the dark part contour feature, some texture images are used to highlight the bright part contour feature, and some texture images are used to highlight the effect presented based on the pigment adsorption capability.

For example, the texture images corresponding to the same painting carrier may include one or more of the following: a texture layer image, a gloss layer image, a gloss absorption layer image, a color deposition layer image, and a shadow layer image. The following describes these texture images.

### (1) Texture layer image

The texture layer image presents features of a texture shape, a texture size, and a texture depth of a texture of a painting carrier.

A texture feature presented by the texture layer image is irrelevant to a direction of light. To be specific, the texture layer image may present the features of the texture shape, the texture size, and the texture depth of the texture under a diffuse light condition (or under a non-specific-direction light condition).

For an example of the texture layer image, refer to (a) in FIG. 4.

### (2) Gloss layer image

The gloss layer image presents a contour of the texture of the painting carrier under a specific-direction light condition, and in the presented texture contour, a dark part contour is eliminated, and a bright part contour is highlighted. In other words, the gloss layer image may highlight a bright part of the texture contour. The texture feature presented by the gloss layer image is related to the direction of light.

To be specific, the gloss layer image may present features such as texture brightness, texture glossiness, and the texture depth of the texture of the painting carrier under the specific-direction light condition. Texture rendering is performed on an image of a user by using the gloss layer image, so that a texture effect can be reflected in a painting part of the user, and a dark part presents a painting effect of the user.

For an example of the gloss layer image, refer to (b) in FIG. 4.

### (3) Gloss absorption layer image

The gloss absorption layer image presents the texture contour of the painting carrier, and in the presented texture contour, a dark color part is eliminated, and a light color part is highlighted. The texture feature presented by the gloss layer image is related to the direction of light.

Compared with the gloss layer image, the gloss absorption layer image has more bright areas. To be specific, the gloss absorption layer image may present the features such as the texture brightness, the texture glossiness, and the texture depth of the texture of the painting carrier under the specific-direction light condition. Texture rendering is performed on the image of the user by using the gloss absorption layer, so that the texture effect can be presented in the painting part of the user, and an effect that color is absorbed may be further presented.

### (4) Color deposition layer image

The color deposition layer image presents depression of the texture of the painting carrier, or presents a feature of the texture (or further including a material) in color deposition, or presents the effect presented based on the color adsorption capability.

Paper is used as an example. When pigment is used to paint on the paper, if a color deposition degree of the paper is high, a deposition effect of a color on the paper is good, and a color presented on the paper is closer to an actual color of the pigment. On the contrary, if the color deposition degree of the paper is low, the deposition effect of the color on the paper is poor, and the color presented on the paper is lighter than the actual color of the pigment.

For example, for a same piece of paper, textures in different areas differ in texture features (for example, a texture depression degree), and further, there may be slight differences in paper thickness or material in different areas. These differences affect a color deposition effect. For example, a larger texture depression degree indicates a more remarkable color deposition effect.

For an example of the color deposition layer image, refer to (c) in FIG. 4.

### (5) Shadow layer image

The shadow layer image presents the contour of the texture of the painting carrier, and in the presented texture contour, the dark part contour is highlighted, and the bright part contour is eliminated. In other words, the shadow layer image may highlight a dark part of the texture contour. The texture feature presented by the shadow layer image is related to the direction of light.

It should be understood that the foregoing merely provides examples of several possible types of texture images, and this application is not limited thereto. In actual application, another type of texture image may present another texture feature of the paper.

The following uses the foregoing types of texture images as an example to describe manners of obtaining the texture images.

In a possible implementation, for a painting carrier, for example, a piece of paper (for example, a piece of white paper), photographing may be performed on the painting carrier under different light conditions, and then different image processing is performed on an obtained image, to obtain one or more of a texture layer image, a gloss layer image, a gloss absorption layer image, a color deposition layer image, and a shadow layer image that correspond to the painting carrier.

Optionally, for a plurality of painting carriers of a same material but with different texture features (for example, different texture sizes, different texture depths, or different texture densities), one or more of texture layer images, gloss layer images, gloss absorption layer images, color deposition layer images, and shadow layer images that respectively correspond to the different painting carriers may be obtained in the foregoing manner.

Optionally, for painting carriers of different materials, one or more of texture layer images, gloss layer images, gloss absorption layer images, color deposition layer images, and shadow layer images that correspond to the painting carriers of different materials may be obtained in the foregoing manner. For example, for a piece of rice paper, the rice paper is photographed under different light, and different processing is performed on images obtained through photographing, to obtain a texture layer image, a gloss layer image, a gloss absorption layer image, a color deposition layer image, and a shadow layer image that correspond to the rice paper. For a piece of oil painting paper, the oil painting paper is photographed under different light, and different processing is performed on images obtained through photographing, to obtain a texture layer image, a gloss layer image, a gloss absorption layer image, a color deposition layer image, and a shadow layer image that correspond to the oil painting paper.

The following uses paper as an example to describe manners of obtaining a texture layer image, a gloss layer image, a gloss absorption layer image, a color deposition layer image, and a shadow layer image.

### (1) Manner of obtaining the texture layer image

The paper is photographed under a diffuse light condition. A high pixel may be used for photographing, to show an inherent texture of a paper fiber. Further, an image obtained through photographing may be further processed, for example, information such as a dust spot on the paper is removed. Then, the image obtained through photographing and a background image are processed in a first blending mode, to obtain the texture layer image corresponding to the paper. For example, the first blending mode may be a dark color (Dark Color) mode. For example, the image is blended with the background image in the "dark color" mode. Optionally, the background image may be an image of a single color. Optionally, the background image is light in color. For example, the background image may be a white background image or an off-white background image. For example, the background image may be a background image whose size is the same as that of the image obtained through photographing or processing, and values of all pixels in the background image are (255, 255, 255). The background image may be generated by the electronic device. This application does not limit the background image.

For example, under an outdoor overcast light condition (namely, the diffuse light condition), the paper is photographed, and the image obtained through photographing is blended with the white background image in the "dark color" mode, to obtain the paper texture layer image corresponding to the paper.

An RGB three-channel image is used as an example. An implementation of the dark color mode may be: for same pixel locations in a paper image (namely, the image obtained through photographing and processing in the foregoing manner) and a background image of a same size, calculating a sum of values of three channels R, G, and B (referred to as a value of a blended color B) of a pixel at the location in the paper image, and calculating a sum of values of three channels R, G, and B (referred to as a value of a base color A) of a pixel at the location in the background image. If the value of the blended color B is less than the value of the base color A, the value of the pixel at the location in the paper image is used as a value of a pixel at a same location in the paper texture layer image, in other words, the value of the pixel at the location in the texture layer image is equal to the value of the pixel at the same location in the paper image. If the value of the blended color B is greater than the value of the base color A, the value of the pixel at the location in the background image is used as the value of the pixel at the same location in the paper texture layer image, in other words, the value of the pixel at the location in the texture layer image is equal to the value of the pixel at the same location in the background image. If the value of the blended color B is equal to the value of the base color A, the value of the pixel at the location in the paper image or the background image is used as the value of the pixel at the same location in the paper texture layer image, in other words, the value of the pixel at the location in the texture layer image is equal to the value of the pixel at the same location in the paper image or the background image.

The values of the channels R, G, and B range from 0 to 255. For a pixel, if values of channels R, G, and B of the pixel are (0, 0, 0), the pixel is displayed in black, and if the values of the channels R, G, and B of the pixel are (255, 255, 255), the pixel is displayed in white.

Through processing on the paper image and the background image in the dark color mode, a texture in the paper image can be presented in the texture layer image. Because the paper image is obtained through photographing under the diffuse light condition, the texture layer image may present features of a texture shape, a texture size, and a texture depth of a texture of the paper under the diffuse light condition.

### (2) Manner of obtaining the gloss layer image

The paper is photographed under a specific-direction light condition. A high pixel may be used for photographing, to show an inherent texture of a paper fiber. Further, an image obtained through photographing may be further processed, for example, information such as a dust spot on the paper is removed. Then, the image obtained through photographing and a background image are processed in a second blending mode, to obtain the gloss layer image corresponding to the paper. For example, the second blending mode may be a color screening (Screen) mode. For example, the image is blended with the background image in the "color screening" mode. Optionally, the background image is the same as the background image used to obtain the texture layer image. For example, under a specific-direction light source condition, the paper is photographed, and "color screening" processing is performed on the image obtained through photographing and the background image, to eliminate a very dark part, and reflect a bright part contour, so as to obtain the gloss layer image corresponding to the paper.

Optionally, a contrast of the image obtained through photographing may be increased before processing in the color screening mode is performed.

An RGB three-channel image is used as an example. An implementation of the color screening mode may be:
for same pixel locations in a paper image (namely, the image obtained through photographing and processing in the foregoing manner) and a background image of a same size, a value of each channel of a pixel at a same location in the gloss layer image is obtained through calculation according to the following formula: $C = 255 - \frac{\left(255-A\right) \times \left(255-B\right)}{255}$

Herein, C represents a value of a channel of a pixel in the gloss layer image, A represents a value of a channel of a pixel in the background image, and B represents a value of a channel of a pixel in the paper image.

In the foregoing manner, calculation is separately performed on three channels of a pixel, to obtain values of the three channels of the pixel. The value of each pixel in the gloss layer image may be obtained by calculating each pixel in the foregoing manner, to obtain the gloss layer image.

Through processing on the paper image and the background image in the color screening mode, a complementary color of a color of a pixel in the paper image and a complementary color of a color of a pixel in the background image may be multiplied, and then divided by 255 to obtain a blended pixel value. Generally, a color obtained through processing in the color screening mode is light. For example, any color and white are processed in the color screening mode to obtain white. For example, the paper image and a white background image are processed in the color screening mode, so that a bright color part of a texture can be enhanced, to obtain a texture contour with a very bright part.

### (3) Manner of obtaining the gloss absorption layer image

The paper is photographed under a specific-direction light condition. A high pixel may be used for photographing, to show an inherent texture of a paper fiber. Further, an image obtained through photographing may be further processed, for example, information such as a dust spot on the paper is removed. Optionally, the image photographed in the manner of obtaining the gloss layer image may be used. That is, different processing is performed on the same paper image obtained through photographing, to obtain the gloss layer image and the gloss absorption layer image.

Then, the image obtained through photographing and a background image are processed in a third blending mode, to obtain the gloss absorption layer image corresponding to the paper. For example, the third blending mode may be a light color (Lighter Color) mode. For example, the image is blended with the background image in the "light color" mode. Optionally, the background image may be an image of a single color. Optionally, the background image is the same as the background image used to obtain the texture layer image or the gloss layer image.

For example, under the outdoor overcast light condition (namely, the diffuse light condition), the paper is photographed, and the image obtained through photographing is blended with the white background image in the "light color" mode, to obtain the gloss absorption layer image corresponding to the paper.

An RGB three-channel image is used as an example. An implementation of the light color mode may be: for same pixel locations in a paper image (namely, the image obtained through photographing and processing in the foregoing manner) and a background image of a same size, calculating a sum of values of three channels R, G, and B (referred to as a value of a blended color B) of a pixel at the location in the paper image, and calculating a sum of values of three channels R, G, and B (referred to as a value of a base color A) of a pixel at the location in the background image. If the value of the blended color B is greater than the value of the base color A, the value of the pixel at the location in the paper image is used as a value of a pixel at a same location in the paper texture layer image, in other words, the value of the pixel at the location in the texture layer image is equal to the value of the pixel at the same location in the paper image. If the value of the blended color B is less than the value of the base color A, the value of the pixel at the location in the background image is used as the value of the pixel at the same location in the paper texture layer image, in other words, the value of the pixel at the location in the texture layer image is equal to the value of the pixel at the same location in the background image. If the value of the blended color B is equal to the value of the base color A, the value of the pixel at the location in the paper image or the background image is used as the value of the pixel at the same location in the paper texture layer image, or in other words, the value of the pixel at the location in the texture layer image is equal to the value of the pixel at the same location in the paper image or the background image.

Through processing on the paper image and the background image in the light color mode, a light color part of the texture in the paper image can be highlighted, and a dark color part is eliminated, so that features such as texture brightness, texture glossiness, and texture depth of the texture of the paper under the specific-direction light condition can be presented.

### (4) Manner of obtaining the color deposition layer image

The paper is dyed once or more times by water, ink, or other liquid pigment, and then the paper is photographed. A high pixel may be used for photographing, to show an inherent texture of a paper fiber. Further, an image obtained through photographing may be further processed, for example, information such as a spot on the paper is removed. Then, the image obtained through photographing and a background image are processed in a fourth blending mode, to obtain the texture layer image corresponding to the paper. For example, the fourth blending mode may be a color burn (Color Burn) mode. For example, the image is blended with the background image in the "color burn" mode. Optionally, the background image may be an image of a single color. Optionally, the background image is the same as the background image used to obtain the texture layer image, the gloss layer image, or the gloss absorption layer image.

For example, under the outdoor overcast light condition (namely, the diffuse light condition), the dyed paper is photographed, and the image obtained through photographing is blended with the white background image in the "color burn" mode, to obtain a paper texture layer image corresponding to the paper.

An RGB three-channel image is used as an example. An implementation of the color burn mode may be:
for same pixel locations in a paper image (namely, the image obtained through photographing and processing in the foregoing manner) and a background image of a same size, a value of each channel of a pixel at a same location in the color deposition layer image is obtained through calculation according to the following formula: $C = A - \frac{\left(255-A\right) \times \left(255-B\right)}{B}$

Herein, C represents a value of a channel of a pixel in the gloss layer image, A represents a value of a channel of a pixel in the background image, and B represents a value of a channel of a pixel in the paper image.

In the foregoing manner, calculation is separately performed on three channels of a pixel, to obtain values of the three channels of the pixel. The value of each pixel in the color deposition layer image may be obtained by calculating each pixel in the foregoing manner, to obtain the gloss layer image.

Texture rendering is performed on an image of a user in the color burn mode, so that only a texture is displayed in a part that is not painted in the image of the user, and a deeper color of a part painted by the user indicates a deeper deposition effect.

After the paper is dyed, because different areas have different color deposition effects, some areas may be dark in color, indicating that a large amount of color is deposited in the areas, and some other areas may be light in color, indicating that a small amount of color is deposited in the areas, so that color deposition features of textures in different areas of the paper can be presented.

Through processing on the paper image and the background image in the dark color mode, color deposition features of different areas in the paper image can be presented in the color deposition layer image.

### (5) Manner of obtaining the shadow layer image

The paper is photographed under a specific-direction light condition. A high pixel may be used for photographing, to show an inherent texture of a paper fiber. Further, an image obtained through photographing may be further processed, for example, information such as a dust spot on the paper is removed. Then, the image obtained through photographing and the background image are processed in a fifth blending mode, to obtain the shadow layer image corresponding to the paper. For example, the fifth blending mode may be a multiply blending mode (Multiply). For example, the image is blended with the background image in the "multiply" blending mode. Optionally, the background image is the same as the background image used to obtain the texture layer image. For example, under a specific-direction light source condition, the paper is photographed, and "multiply" processing is performed on the image obtained through photographing and the background image, to enhance a contour of a dark part, so as to obtain the gloss layer image corresponding to the paper.

Optionally, before processing is performed in the multiply blending mode, brightness and darkness of the image obtained through photographing may be highlighted, and a distribution ratio of the brightness to the darkness may be adjusted.

An RGB three-channel image is used as an example. An implementation of the multiply mode may be:
for same pixel locations in a paper image (namely, the image obtained through photographing and processing in the foregoing manner) and a background image of a same size, a value of each channel of a pixel at a same location in the shadow layer image is obtained through calculation according to the following formula: $C = \frac{A \times B}{255}$

Herein, C represents a value of a channel of a pixel in the shadow layer image, A represents a value of a channel of a pixel in the background image, and B represents a value of a channel of a pixel in the paper image.

In the foregoing manner, calculation is separately performed on three channels of a pixel, to obtain values of the three channels of the pixel. The value of each pixel in the shadow layer image may be obtained by calculating each pixel in the foregoing manner, to obtain the shadow layer image.

Generally, a color processed in the multiply mode is darker than two original colors. Any color and black are processed in the multiply mode still to obtain black. Any color and white are processed in the multiply mode to remain unchanged. Other colors are processed in the multiply mode to produce an effect of lighting with this color in a darkroom.

In another possible implementation, the paper image under diffuse light may be obtained from an existing paper texture image library, and then the texture layer image is obtained based on the paper image in the foregoing manner of obtaining the texture layer image. Image processing or AI processing is performed on the paper image to obtain the paper image under the specific-direction light condition, then the gloss layer image is obtained in the foregoing manner of obtaining the gloss layer image, and the gloss absorption layer image is obtained in the foregoing manner of obtaining the gloss absorption layer image. Similarly, the shadow layer image may also be obtained. A manner of obtaining the paper image in the paper texture image library is not limited in embodiments of this application. For example, the paper image may be obtained through actual photographing, or may be generated in an AI manner.

After one or more of the texture layer image, the gloss layer image, the gloss absorption layer image, the color deposition layer image, and the shadow layer image corresponding to the same paper are obtained for the paper, a database or a data table corresponding to the paper may be established and is used to store related parameters of one or more of the texture layer image, the gloss layer image, the gloss absorption layer image, the color deposition layer image, and the shadow layer image. For example, the related parameters may include a material type, types and identifiers of the texture layer image, the gloss layer image, the gloss absorption layer image, the color deposition layer image, and the shadow layer image, an image size, and the like. For example, Table 1 shows an example of a data table corresponding to paper.

**Table 1: Content of the data table corresponding to the paper**

| Material type | Texture image type | Texture image identifier | Image size (pixel) |
|---|---|---|---|
| Rice paper | Texture layer | ID 1 | aa*bb |
| | Gloss layer | ID 2 | aa*bb |
| | Gloss absorption layer | ID 3 | aa*bb |
| | Color deposition layer | ID 4 | aa*bb |
| | Shadow layer | ID 5 | aa*bb |

"ID 1" and "aa" in Table 1 are used to represent specific values. A value of the specific value is not limited in this application. The texture image identifier can uniquely identify a texture image.

For paper of a same material but with different texture features (for example, texture granularity sizes and/or texture granularity densities), after one or more of texture layer images, gloss layer images, gloss absorption layer images, color deposition layer images, and shadow layer images respectively corresponding to the paper with different texture features are obtained, a database or a data table corresponding to the paper of the material may be established and is used to store related parameters of one or more of the texture layer images, the gloss layer images, the gloss absorption layer images, the color deposition layer images, and the shadow layer images. For example, Table 2 shows an example of a data table corresponding to the paper of the same material.

**Table 2: Content of the data table corresponding to the paper of the same material**

| Material type | Texture feature level | Texture image type | Texture image identifier | Image size (pixel) |
|---|---|---|---|---|
| Rice paper | First level (small texture granularity and high density) | Texture layer | ID 1 | aa*bb |
| | | Gloss layer | ID 2 | aa*bb |
| | | Gloss absorption layer | ID 3 | aa*bb |
| | | Color deposition layer | ID 4 | aa*bb |
| | | Shadow layer | ID 5 | aa*bb |
| | Second level (large texture granularity and low density) | Texture layer | ID 6 | aa*bb |
| | | Gloss layer | ID 7 | aa*bb |
| | | Gloss absorption layer | ID 8 | aa*bb |
| | | Color deposition layer | ID 9 | aa*bb |
| | | Shadow layer | ID 10 | aa*bb |

It should be understood that the "texture feature level" shown in Table 2 indicates a texture size (namely, a texture granularity size) and a texture density (indicating a quantity of texture granularities in a unit area). There may be a negative correlation between the texture size and the texture density. For example, a larger texture granularity size indicates a lower density. Alternatively, there may be no negative correlation between the texture granularity size and the texture density. For example, when the texture granularity size is large, the texture density may be low. In other words, the texture feature level may indicate one or more of a texture granularity size, a texture granularity density, and another feature (for example, a texture depth). The texture feature level described in Table 2 is merely a possible example. This is not limited in embodiments of this application.

After one or more of the corresponding texture layer image, the gloss layer image, the gloss absorption layer image, the color deposition layer image, and the shadow layer image are obtained for different materials, a database or a data table corresponding to painting carriers of different materials may be established and is used to store related parameters of one or more of the texture layer image, the gloss layer image, the gloss absorption layer image, the color deposition layer image, and the shadow layer image. For example, Table 3 show an example of a data table corresponding to paper of a plurality of materials.

**Table 3: Content of the data table corresponding to the paper of the plurality of materials**

| Material type of a painting carrier | Texture feature level | Texture image type | Texture image identifier | Image size |
|---|---|---|---|---|
| Rice paper | First level (small texture granularity and high density) | Texture layer | ID 1 | aa*bb |
| | | Gloss layer | ID 2 | aa*bb |
| | | Gloss absorption layer | ID 3 | aa*bb |
| | | Color deposition layer | ID 4 | aa*bb |
| | | Shadow layer | ID 5 | aa*bb |
| | Second level (large texture granularity and low density) | Texture layer | ID 6 | aa*bb |
| | | Gloss layer | ID 7 | aa*bb |
| | | Gloss absorption layer | ID 8 | aa*bb |
| | | Color deposition layer | ID 9 | aa*bb |
| | | Shadow layer | ID 10 | aa*bb |
| Oil painting canvas | First level (small texture granularity and high density) | Texture layer | ID 11 | aa*bb |
| | | Gloss layer | ID 12 | aa*bb |
| | | Gloss absorption layer | ID 13 | aa*bb |
| | | Color deposition layer | ID 14 | aa*bb |
| | | Shadow layer | ID 15 | aa*bb |
| | Second level (large texture granularity and low density) | Texture layer | ID 16 | aa*bb |
| | | Gloss layer | ID 17 | aa*bb |
| | | Gloss absorption layer | ID 18 | aa*bb |
| | | Color deposition layer | ID 19 | aa*bb |
| | | Shadow layer | ID 20 | aa*bb |

"ID 1" and the like in Table 3 represent specific values. A value of the specific value is not limited in this application.

It should be understood that Table 1, Table 2, and Table 3 are merely examples of several possible data structures. The data structure is not limited in this application.

It should be further understood that Table 1, Table 2, and Table 3 show only some parameters. In an actual scenario, more parameters may be included. This is not limited in this application.

In embodiments of this application, different texture images may be combined, and each combination may include one texture image or a plurality of different texture images. After texture rendering is performed on a same painting work by using different texture image combinations, different painting effects or visual effects may be presented, or different painting styles may be presented.

Based on the foregoing texture images, in embodiments of this application, the foregoing texture images may be combined, to obtain the following several types of combinations:
a combination 1, including a texture layer image, a shadow layer image, a gloss layer image, and a color deposition layer image;
a combination 2, including a texture layer image and a color deposition layer image;
a combination 3, including a texture layer image, a shadow layer image, and a gloss layer image;
a combination 4, including a texture layer image, a shadow layer image, and a gloss absorption layer image;
a combination 5, including a texture layer image and a gloss layer image;
a combination 6, including a texture layer image and a gloss absorption layer image;
a combination 7, including a texture layer image, a gloss absorption layer image, and a color deposition layer image; and
a combination 8, including a texture layer image, a gloss layer image, and a color deposition layer image.

An arrangement sequence of images included in the foregoing combinations is merely a possible example. An arrangement sequence of images in each combination is not limited in this application.

It should be understood that the foregoing merely shows several possible combinations, and this application is not limited thereto.

In embodiments of this application, an identifier of a texture image combination may be set for each texture image combination, to uniquely identify a texture image combination.

In some embodiments of this application, a correspondence between a different texture image and a painting style may be set. In this way, after the user selects a painting style, an image processing application may determine, based on the correspondence, which texture image or which texture images are used to process the painting work of the user, to obtain a painting work of a corresponding style.

Texture images or combinations of texture images used to implement different painting styles may be set based on characteristics of the different painting styles. For example, a painting of an ink wash painting style needs to present both a texture effect and a color absorption effect at a painting part of the user. Therefore, the gloss layer image may be used to perform texture rendering on the painting work, to implement the ink wash painting style. For another example, a painting of an oil painting style needs to present a rough texture feature specific to an oil painting canvas, and a deposition effect of oil painting pigment on the canvas is clear. The oil painting pigment is affected by a texture on the canvas, and a texture contour presented by the oil painting pigment is clear. Therefore, a texture layer image and a color deposition layer image corresponding to the oil painting canvas may be used to perform texture rendering on the painting work, to implement the oil painting style.

Table 4 shows an example of a correspondence between a painting style and a texture image.

**Table 4: Correspondence between a painting style and a texture image corresponding to a same painting carrier**

| Painting style | Texture image |
|---|---|
| Ink wash painting style | Texture layer image and gloss absorption layer image |
| Watercolor painting style | Texture layer image, gloss absorption layer image, and color deposition layer image (where the color deposition layer image is obtained based on paper dyed with watercolor pigment) |
| Oil painting style | Texture layer image, gloss layer image, and color deposition layer image |

Optionally, in Table 4, the "texture layer image" may be specifically an identifier of the texture layer image, or other information for uniquely determining the texture layer image. Similarly, other types of texture images in Table 4 may also be understood in this way.

Optionally, in Table 4, a group of texture images corresponding to the ink wash painting style may alternatively be replaced with an identifier of a texture image combination. For example, the "texture layer image and gloss absorption layer image" may be specifically the identifier of the texture image combination. Similarly, a group of texture images corresponding to another painting style in Table 4 may also be understood in this way.

Table 5 shows a correspondence between a material type of a painting carrier and a texture image.

**Table 5: Correspondence between a painting style and a texture image corresponding to a same painting carrier**

| Material type of a painting carrier | Texture image |
|---|---|
| Rice paper | Texture layer image and gloss absorption layer image |
| Watercolor paper | Texture layer image, gloss absorption layer image, and color deposition layer image (where the color deposition layer image is obtained based on paper dyed with watercolor pigment) |
| Oil painting canvas | Texture layer image, gloss layer image, and color deposition layer image |

Optionally, in Table 5, the "texture layer image" may be specifically an identifier of the texture layer image, or other information for uniquely determining the texture layer image. Similarly, other types of texture images in Table 5 may also be understood in this way.

Optionally, in Table 5, a group of texture images corresponding to "rice paper" may alternatively be replaced with an identifier of a texture image combination. For example, the "texture layer image and gloss absorption layer image" may be specifically the identifier of the texture image combination. Similarly, a group of texture images corresponding to another material type in Table 5 may also be understood in this way.

Table 6 shows a correspondence between both a painting style and a material type of a painting carrier and texture images.

**Table 6: Correspondence between both a painting style and a material type and texture images corresponding to different painting carriers**

| Painting style | Material type of a painting carrier | Texture image |
|---|---|---|
| Oil painting style | Oil painting paper | Texture layer image 1, gloss layer image 1, and color deposition layer image 1 |
| Oil painting style | Oil painting canvas | Texture layer image 2, gloss layer image 2, and color deposition layer image 2 |

Optionally, in Table 6, the "texture layer image 1" may be specifically an identifier of the texture layer image, or other information for uniquely determining the texture layer image. Similarly, other types of texture images in Table 6 may also be understood in this way.

Optionally, in Table 6, a group of texture images corresponding to the "texture layer image 1, gloss layer image 1, and color deposition layer image 1" may alternatively be replaced with an identifier of a texture image combination. Similarly, the "texture layer image 2, gloss layer image 2, and color deposition layer image 2" may alternatively be replaced with an identifier of a corresponding texture image combination.

It should be understood that Table 4, Table 5, and Table 6 only provide examples of several possible correspondences. This is not limited in embodiments of this application.

In some embodiments of this application, a correspondence between a texture feature (for example, a texture granularity density and/or a texture granularity size) and a brush parameter may be set. Based on the correspondence, the image processing application may set a brush based on a texture feature parameter (for example, a texture granularity density) set by the user (or required by the user) and a corresponding brush parameter. In other words, a default parameter of the brush may be set based on the texture feature parameter set by the user. It should be understood that the user may adjust the default parameter of the brush according to a requirement of the user. This is not limited in this application.

In a possible implementation, the brush parameter may include one or more of a brush stroke softness, a brush stroke size, a brush stroke flow, and brush viscosity. A hard brush stroke is usually applicable to drawing some clear and outline lines. A soft brush stroke is usually applicable to scenarios such as smearing and coating. The brush stroke size is related to fineness of the painting. The brush stroke flow means a flow speed of the paint during painting, namely, smearing "concentration" of the brush. For a scenario in which an image needs to present rich and delicate colors, a small brush stroke flow may be set. Conversely, if a main feature of the painting is to emphasize the vividness of the color, a large brush stroke flow may be set. The brush viscosity is usually used to adjust a limitation degree of a specific part of the brush. The brush viscosity may be adjusted to control intuitiveness, a deformation degree, and the like of the brush. Generally, if the brush viscosity is high, a painting result is softer and a transformation feature is clearer.

Based on impact of the foregoing brush parameters on the painting style, for example, in some embodiments of this application, if the texture granularity density is large, for example, greater than a set threshold, or is at a density level corresponding to a large density value, a hard brush stroke may be set, to achieve a clearer painting effect. On the contrary, if the texture granularity density is small, a soft brush stroke may be set, to achieve a smoother painting effect. This is not limited in this application.

In another possible implementation, the brush parameter may include one or more of a brush shape and a brush material. The brush material may also be referred to as a brush granularity. Lines painted by using different brush materials have different granularities on edge contours. For example, by setting a correspondence between a texture granularity density and a brush material, an association between granularity fineness of a paper texture (texture granularity fineness is related to the texture granularity density) and granularity fineness of the brush material may be established.

Based on the foregoing texture images, in embodiments of this application, when image processing is performed, the image of the user (for example, the painting work of the user) may be, based on a painting style and/or a material type of a selected painting carrier, blended with one or more texture images corresponding to the painting style and/or the material type, so that the image of the user presents a texture effect corresponding to the painting style, to implement a painting effect of a real painting style like watercolor, ink wash, or oil painting.

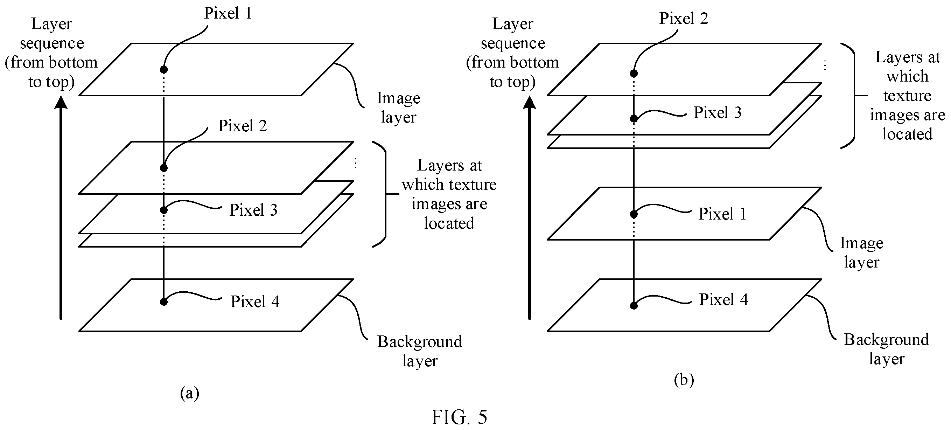

The following describes the image processing method provided in embodiments of this application with reference to FIG. 5 to FIG. 10.

FIG. 5 is a diagram of a principle of an image processing method according to an embodiment of this application. As shown in FIG. 5, when an image of a user is processed, a background layer, a layer at which the image of the user is located, and a layer at which a texture image is located may be blended. After the blending processing, these layers are combined into one layer, and an image on this layer is an image with a painting style that is obtained through texture rendering.

Optionally, the background layer is an optional layer. An image processing application provided in embodiments of this application may provide a default background layer, for example, a white background layer.

It should be understood that there may be one or more layers at which the image of the user is located. Only one layer is used as an example for description in the figure.

Because there may be one or more texture images used to implement the painting style, correspondingly, there may also be one or more layers at which the texture images in FIG. 5 are located, and there is only one texture image at one layer.

These layers may be arranged in a sequence shown in (a) in FIG. 5, or may be arranged in a sequence shown in (b) in FIG. 5.

When blending processing is performed on these layers, blending processing is separately performed on pixels of layers at a same location. A pixel location shown in (b) in FIG. 5 is used as an example. During blending processing, pixel values of a pixel 2 of a topmost layer at which a texture image is located, a pixel 3 of an intermediate layer at which a texture image is located, a pixel x (not shown in the figure) of a bottommost layer at which a texture image is located, a pixel 1 of a layer at which the image of the user is located, and a pixel 4 of the background layer are calculated, to obtain a pixel value after blending processing. The pixel value is a pixel value of a pixel of a blended layer at the pixel location, and an image carried by the layer is an image obtained through texture rendering.

The blending mode used for performing blending processing on these layers may vary according to different painting styles. The used blending mode includes but is not limited to the following types: a darkening mode (Darken), a multiply mode (Multiply), a color burn mode (Color Burn), a linear burn mode (Linear Burn), a dark color mode (Dark Color), an addition mode (Add), a lightening mode (Lighten), a color screening mode (Screen), a color dodge mode (Color Dodge), a linear dodge mode (Linear Dodge), a light color mode (Lighter Color), an overlay mode (Overlay), a soft light mode (Soft Light), a hard light mode (Hard Light), a vivid light mode (Vivid Light), a linear light mode (Linear Light), a pin light mode (Pin Light), a hard mix mode (Hard Mix), a difference mode (Difference), an exclusion mode (Exclusion), a subtraction mode (Subtract), a division mode (Divide), and the like. This application does not limit the used blending mode.

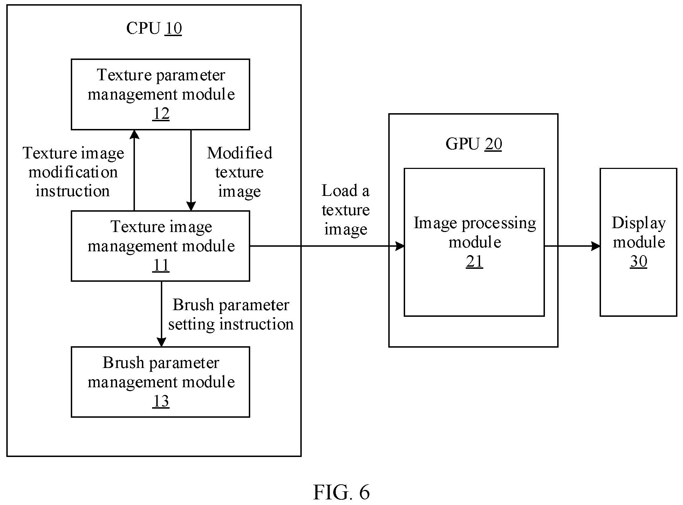

Based on the foregoing principle, in embodiments of this application, based on the system architecture shown in FIG. 3, a system architecture of an image processing application shown in FIG. 6 is provided.

FIG. 6 is a diagram of the system architecture of the image processing application according to an embodiment of this application. The architecture may include a texture image management module 11 and an image processing module 21. Optionally, a texture parameter management module 12 may be further included. Optionally, a brush parameter management module 13 may be further included. The texture image management module 11, the texture parameter management module 12, and the brush parameter management module 13 may be located in a CPU 10, and the image processing module 21 may be located in a GPU 20. An image processed by the image processing module 21 may be displayed by a display module 30.

The texture image management module 11 is configured to manage a texture image. For example, a management function of the texture image management module 11 for the texture image may be reflected in one or more of the following aspects:
Aspect 1: Storage management is performed on the texture image. The texture image management module 11 may maintain a storage location of the texture image, so that a corresponding texture image may be obtained based on a material type or a painting style selected by a user, and provided for the image processing module 21. The texture image management module 11 may further maintain related parameters of the texture image, for example, parameters such as an identifier, an image size, and a texture feature level of the texture image, for example, may establish and maintain the data structure shown in Table 1, Table 2, or Table 3.
Aspect 2: A correspondence between a texture image and a painting style is managed. For example, the data structure shown in Table 4 or Table 5 may be stored and maintained.
Aspect 3: In response to a requirement like a painting style, a material type, and/or a texture feature (for example, including a texture granularity density and/or a texture granularity size) selected by the user, a corresponding texture image is obtained, and the texture image is provided for the image processing module 21 (or the corresponding texture image is loaded to the image processing module 21).
Aspect 4: Based on a size of the image of the user and/or a requirement of the user for the texture parameter (for example, including the texture granularity density and/or the texture granularity size), the texture parameter management module 12 is indicated to modify the texture image, and a modified texture image is provided for the image processing module 21.
Aspect 5: Based on the determined texture feature (for example, including the texture granularity density and/or the texture granularity size) of the texture image, and based on the correspondence between the texture feature and the brush parameter, the brush parameter management module 13 is indicated to set a brush.

It should be understood that the foregoing merely provides an example of the management function that may be provided by the texture image management module 11. This is not limited in embodiments of this application.

The texture parameter management module 12 may be configured to modify the texture image based on an indication of the texture image management module 11, and provide the modified texture image for the texture image management module 11. Optionally, the texture image management module 11 may send a texture image modification instruction to the texture parameter management module 12, and the instruction may indicate the texture parameter management module 12 to modify a texture image.

For example, if the size of the image of the user does not match the size of the texture image, the texture parameter management module 12 may change the size of the specified texture image to be the same as the size of the image of the user by using the following methods:
Manner 1: If a difference between the size of the image of the user and the size of the texture image is within a tolerable range, for example, both a difference in a horizontal direction and a difference in a vertical direction are within a range of ±10%, the texture image may be scaled, and the size of the texture image is adjusted to be the same as the size of the image of the user. Because the difference between the size of the texture image and the size of the image of the user is not large, stretching the texture image does not greatly affect the texture feature presented by the texture image, and can ensure presentation of a corresponding painting style.
Manner 2: If the size of the image of the user is greater than the size of the texture image and exceeds the foregoing tolerable range, the texture image may be copied a plurality of times, and the plurality of same texture images may be spliced, so that a size of a spliced texture image matches the size of the image of the user. It may be understood that, if the size of the spliced texture image is excessively large, the spliced texture image may be cropped to match the size of the image of the user.

In this manner, it can be ensured that the texture feature of the texture image remains unchanged, and it can be ensured that the corresponding painting style is presented.

Manner 3: If the size of the image of the user is less than the size of the texture image and exceeds the foregoing tolerable range, the texture image may be cropped, so that a cropped texture image matches the size of the image of the user.

In this manner, it can be ensured that the texture feature of the texture image remains unchanged, and it can be ensured that the corresponding painting style is presented.

For another example, if the texture feature required by the user is different from the texture feature of the texture image, the texture parameter management module 12 may be configured to adjust the texture feature of the specified texture image by using the following methods, to meet the requirement of the user.

Manner 1: If the texture granularity density required by the user is greater than the texture granularity density of the texture image, the size of the texture image may be reduced, so that the texture granularity density increases, and then a texture image with an increased texture granularity density is copied and spliced, to obtain a texture image whose texture granularity density meets the requirement and whose size matches the size of the image of the user.

Manner 2: If the texture granularity density required by the user is less than the texture granularity density of the texture image, the size of the texture image may be stretched, so that the texture granularity density is reduced, and then a texture image with a reduced texture granularity density is cropped, to obtain a texture image whose texture granularity density meets the requirement and whose size matches the size of the image of the user.

Similarly, if the size of the texture granularity required by the user is different from the size of the texture granularity of the texture image, the texture image may also be correspondingly adjusted based on the same principle, to meet the requirement of the user.

It should be understood that the foregoing merely provides an example of the function that may be implemented by the texture parameter management module 12. This is not limited in embodiments of this application.

The brush parameter management module 13 may be configured to set a brush based on an indication of the texture image management module 11. For example, after determining the texture image, the texture image management module 11 may determine a corresponding brush parameter based on the texture feature (for example, including the texture granularity density and/or the texture granularity size) of the texture image, send a brush parameter setting instruction to the brush parameter management module 13, and indicate a specific brush parameter to the brush parameter management module 13 by using the instruction. The brush parameter management module 13 may set the brush according to the instruction.

The image processing module 21 may perform blending processing on the image of the user and the loaded texture image. For a specific implementation, refer to the principle shown in FIG. 5.

The display module 30 may display a processed image.

It should be understood that an information flow indicated by an arrow shown in FIG. 6 is merely a possible example. This is not limited in this application. For example, after modifying the texture image, the texture parameter management module 12 may not need to send the modified texture image to the texture image management module 11, but notify the texture image management module 11 of a storage location of the modified texture image. For another example, the image processing module 21 may store the image obtained through texture rendering in a cache unit, and the display module 30 may obtain image data to be displayed from the cache unit and display the image data.

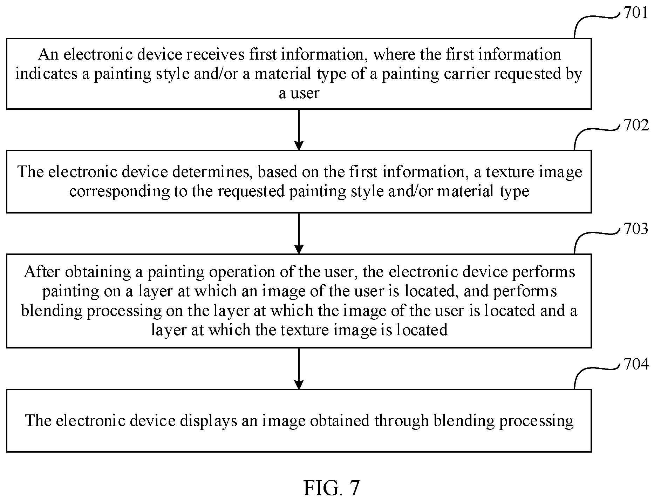

In some embodiments of this application, in a painting process of the user, a painting effect that matches a painting style and/or a material type selected by the user may be displayed in real time following a painting operation of the user. In other words, a display effect of what you see is what you get can be implemented. The following describes the implementation with reference to FIG. 7.

Based on the system architecture shown in FIG. 6, after the image processing application is started, a procedure shown in FIG. 7 may include the following steps.

Step 701: An electronic device receives first information, where the first information indicates a painting style and/or a material type of a painting carrier requested by a user.

In a possible implementation, the user may perform a first user operation by using a user interface provided by the image processing application, and submit related information required by the user, such as the painting style and/or the material type of the painting carrier requested by the user, to the image processing application. The first user operation is used to enable the image processing application performs texture rendering on a currently painted image based on the first information in a process in which the user paints an image.

Optionally, the first user operation may include one or more operation steps, or include one or more operation gestures, or include one or more operation actions. For example, the electronic device may receive a user operation of triggering a painting creation function option by the user (for example, the user taps a function button "create a painting" or selects a menu command "create a painting"), or receive a user operation of triggering a texture setting function option (for example, the user taps a function button "texture setting"). The electronic device displays option information of the painting style and/or the material type of the painting carrier in response to the received user operation, so that the user selects a painting style provided by the application, or selects a material type of a painting carrier provided by the application. After the user completes the selection, the electronic device obtains the first information based on a received user operation used to select the option information.

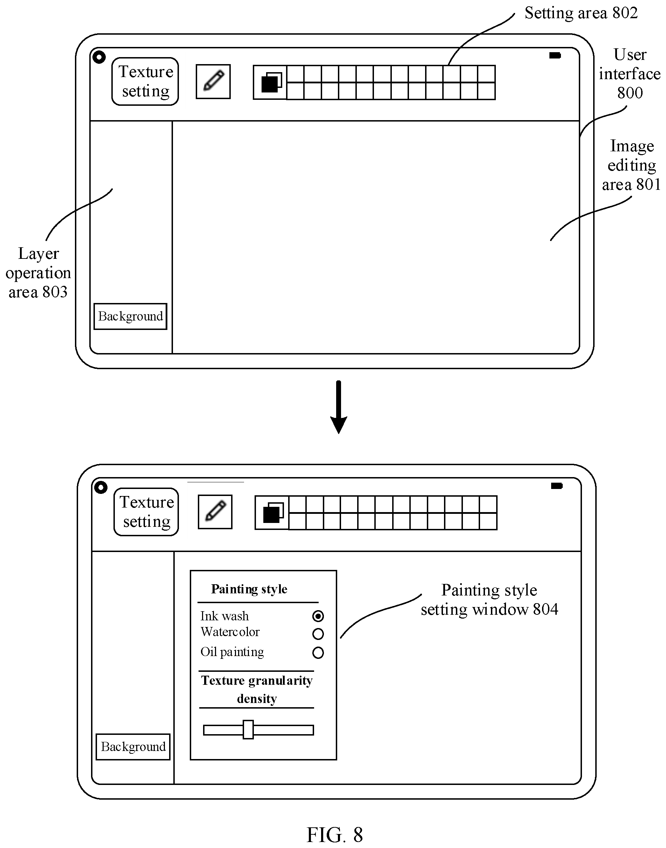

The following provides descriptions with reference to a user interface shown in FIG. 8. As shown in FIG. 8, a user interface 800 includes an image editing area 801, a setting area 802, and a layer operation area 803. The setting area 802 may include a menu, a plurality of setting function buttons, and the like, for example, include a function button "texture setting". After the user triggers the function button "texture setting", a painting style setting window 804 is displayed. The painting style setting window 804 includes a painting style option and a slider used to set a texture granularity density. The user may select a painting style in the window, and further, may set a texture granularity density by using the slider. Optionally, the texture granularity density may be set by default.

In another possible implementation, the application may provide an input box in the user interface, and the user may enter a value of the texture granularity density in the input box.

In another possible implementation, similarly, the image processing application may provide a material type selection function, and allow the user to select a material type from a plurality of material types provided by the application.

In another possible implementation, similarly, the image processing application provides a painting style selection function and a material type selection function, and allows the user to select a painting style and a material type.

It may be understood that the foregoing merely shows an example of an implementation of obtaining the first information in a user interaction manner. In an actual scenario, the first information may be obtained in another manner. This is not limited in this application.

This step may be implemented by the texture image management module 11.

Step 702: The electronic device determines, based on the first information, a texture image corresponding to the requested painting style and/or material type.

In a possible implementation, the electronic device may determine, based on the requested painting style and based on a correspondence (which may be referred to as a first correspondence, where an example may be shown in Table 4) between a painting style and a texture image, one or more texture images corresponding to the requested painting style.

In another possible implementation, the electronic device may determine, based on the requested material type and based on a correspondence (which may be referred to as a second correspondence, where an example may be shown in Table 5) between a material type and a texture image, one or more texture images corresponding to the requested material. Optionally, the texture images corresponding to the requested material may include all texture images corresponding to the material.

In another possible implementation, the electronic device may determine, based on the requested painting style and material type and based on a correspondence (which may be referred to as a third correspondence, where an example may be shown in Table 6) between both a painting style and a material type and a texture image, a texture image corresponding to the painting style and the material type.

In another possible implementation, the electronic device may modify the texture image based on a texture feature requirement requested by the user, to obtain a texture image that meets the texture feature requirement. For a specific implementation, refer to the function of the texture parameter management module.

For example, the user may perform a fifth user operation based on the user interface provided by the application, and the electronic device obtains, based on the fifth user operation, texture feature information set by the user. For example, after receiving a user operation of the user on the slider of a slider control, the electronic device may determine, based on a location of the slider on the slider control, the texture feature information set by the user. If the texture feature information set by the user is not equal to texture feature information of a texture image corresponding to the first information, the electronic device may adjust a size of the texture image based on the texture feature information set by the user, so that a texture granularity density of an adjusted texture image matches a texture granularity density set by the user.

This step may be implemented by the texture image management module 11, or may be implemented by the texture image management module 11 and the texture parameter management module 12 in cooperation.

Step 703: After obtaining a painting operation of the user, the electronic device performs painting on a layer at which an image of the user is located, and performs blending processing on the layer at which the image of the user is located and a layer at which the texture image is located.

The layer at which the image of the user is located may include one layer, or may include a plurality of layers.

Based on a quantity of texture images determined in step 702, the layer at which the texture image is located may include one layer, or may include a plurality of layers.

Optionally, for an arrangement sequence of the layer at which the texture image is located and the layer at which the image of the user is located, refer to FIG. 5.

Optionally, the layer at which the texture image is located is invisible to the user.

Optionally, the layer at which the texture image is located is visible to the user. Optionally, the layer at which the texture image is located does not allow the user to perform editing, or provides only a limited editing function for the user, for example, allows only transparency to be set.

For a specific implementation of this step, refer to the principle shown in FIG. 5.

This step may be implemented by the image processing module 21. The image processing module 21 may store processed image data in the cache unit.

Step 704: The electronic device displays an image obtained through blending processing.

In a possible implementation, the display module 30 may obtain rendered image data from the cache unit according to a specified period, and display the image data for image display.

This step may be implemented by the display module 30.

For ease of differentiation, an image before texture rendering may be referred to as a first image, and an image obtained through texture rendering may be referred to as a second image.

In a possible implementation, when the first information further indicates the texture feature information, the electronic device may further determine, based on the texture feature information indicated by the first information and a fourth correspondence, a brush parameter corresponding to the texture feature information, and set a brush based on the brush parameter. The fourth correspondence includes a correspondence between texture feature information and a brush parameter.

In a possible implementation, when the user needs to modify a painting style, a material type, or texture feature information, the user may select a new painting style or material type or set new texture feature information in a human-computer interaction manner based on the user interface provided by the application, so that the application can perform texture rendering on the image of the user based on the new painting style or material type or the new set texture feature information. The human-computer interaction manner is similar to the first user operation, for example, selecting a new painting style by triggering the function button "texture setting".

Based on the foregoing procedure, each time the user paints on the layer at which the image of the user is located, the electronic device may perform, in the foregoing manner, blending processing on the layer at which the image of the user is located and the layer at which the image texture is located in response to the current painting operation of the user, to implement real-time display of a painting effect that matches the painting style or the material type selected by the user.

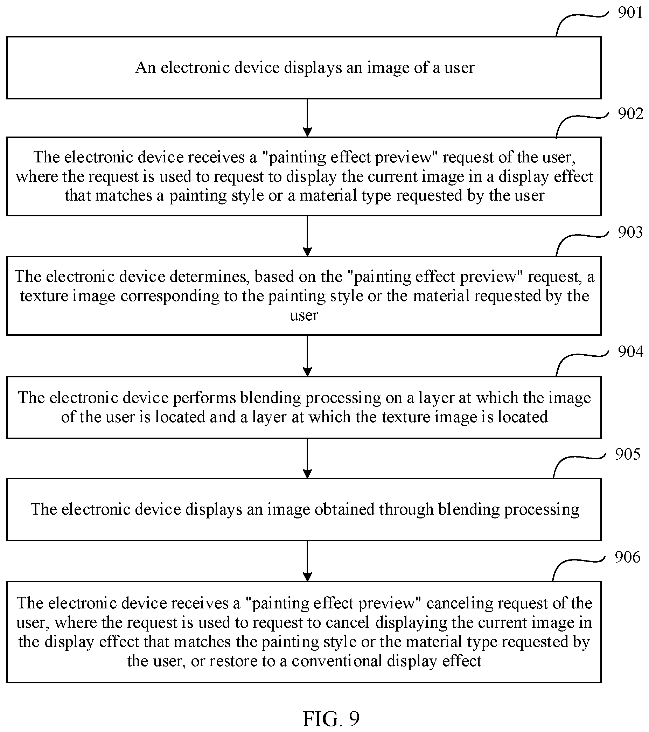

In some other embodiments of this application, in a painting process of the user, a painting effect that matches a painting style or a material type selected by the user may be displayed according to "preview" or a similar indication of the user. If the user cancels "preview", the display can be restored to conventional display. The following describes this implementation with reference to FIG. 9.

Based on the system architecture shown in FIG. 6, after the image processing application is started, a procedure shown in FIG. 9 may include the following steps.

Step 901: An electronic device displays an image of a user (which may be referred to as a first image).

In this step, in a process in which the user uses the image processing application to perform drawing, the electronic device may display a current painting image of the user. The painting image is an image that is not rendered by using a texture image.

Step 902: The electronic device receives a "painting effect preview" request of the user, where the request is used to request to display the current image in a display effect that matches a painting style or a material type requested by the user.

In this step, after the user performs a user operation of triggering a function option for previewing the current image, after the electronic device receives the user operation, the electronic device pauses, in response to the user operation, responding to a user operation of painting the current image, and displays option information of the painting style and/or the material type of the painting carrier. After the user completes a selection operation based on the option information, the electronic device may obtain the first information based on a received user operation used to select the option information.

For example, a third user operation herein may include, for example, a user operation of triggering a button "painting effect preview" on the user interface, and an operation of selecting a painting style in a pop-up window used to set the painting style. The user may submit the "painting effect preview" request by selecting a function option provided by the image processing application.

This step may be implemented by the texture image management module 11.

Step 903: The electronic device determines, based on the "painting effect preview" request, a texture image corresponding to the painting style or the material requested by the user.

In a possible implementation, the painting style or the material type may be selected or set before painting starts. For a specific implementation, refer to step 701 in FIG. 7. Different from the procedure shown in FIG. 7, in the procedure shown in FIG. 9, after obtaining the painting style or the selected material type requested by the user, the electronic device may disable, by default, a function of processing, based on the texture image, an image painted by the user in a painting process of the user. Alternatively, after selecting the painting style or the material type, the user may provide a user interface, where the user interface is used by the user to select whether to enable the function of performing rendering based on the texture image. If the user enables the function of performing rendering based on the texture image, the procedure shown in FIG. 7 is performed. If the user disables the function of performing rendering based on the texture image, the procedure shown in FIG. 9 is performed.

In another possible implementation, after obtaining the "painting effect preview" request of the user, the electronic device may display a user interface used to set or select a painting style and/or a material type. For example, the user interface is provided with a function option used by the user to select a painting style from a plurality of painting styles provided by the application, or the user interface is provided with a function option used by the user to select a material type from a plurality of material types provided by the application. After obtaining the painting style and/or the material type set or selected by the user, the electronic device may perform step 904.

This step may be implemented by the texture image management module 11.

Step 904: The electronic device performs blending processing on a layer at which the image of the user is located and a layer at which the texture image is located.

Optionally, after obtaining the "painting effect preview" request submitted by the user, the electronic device may enter an image editing mode. In this mode, the electronic device does not respond to the painting operation of the user.

For a specific implementation of this step, refer to the principle shown in FIG. 5.

This step may be implemented by the image processing module 21. The image processing module 21 may store processed image data in the cache unit.

Step 905: The electronic device displays an image obtained through blending processing.

For an implementation of this step, refer to step 704.

Step 906: The electronic device receives a "painting effect preview" canceling request of the user, where the request is used to request to cancel displaying the current image in the display effect that matches the painting style or the material type requested by the user, or restore to a conventional display effect.

Optionally, after obtaining the "painting effect preview" canceling request of the user, the electronic device may exit the image editing mode, and may continue to respond to the painting operation of the user.

A specific implementation of this step may be implemented by the texture image management module 11 and the image processing module 21 in cooperation. For example, the texture image management module 11 may indicate the image processing module 21 to restore the current image to an effect that is not processed by using the texture image.

It should be understood that, for a more specific implementation of the procedure shown in FIG. 9, refer to the foregoing embodiment. Details are not described herein again.

Compared with the image processing method shown in FIG. 7, in the image processing method shown in FIG. 9, in the painting process of the user, image processing and display may be performed in a conventional manner, and only when the user needs to view a texture display effect, the electronic device performs editing processing on the image of the user by using the texture image based on the "painting effect preview" request of the user. This can reduce resource overheads.

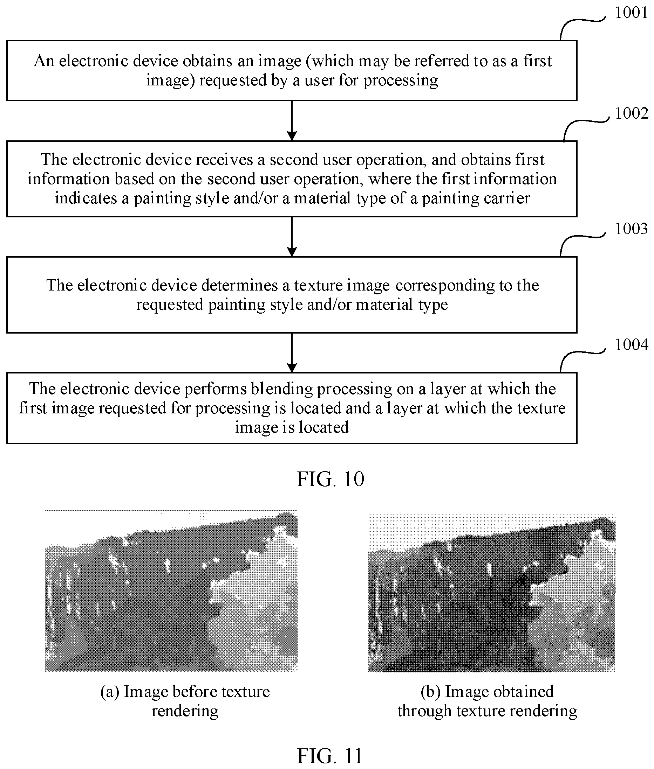

In some other embodiments of this application, an editing operation may be performed on a loaded image of the user, and the image of the user may be processed based on a painting style or a material type selected by the user by using the editing operation, so that the image of the user presents a corresponding painting style. According to an image processing method shown in FIG. 10, an existing or completed image may be processed. The following describes this manner with reference to FIG. 10.

Based on the system architecture shown in FIG. 6, after the image processing application is started, a procedure shown in FIG. 10 may include the following steps.

Step 1001: An electronic device obtains an image (which may be referred to as a first image) requested by a user for processing.

In this step, the user submits an image to be edited to the image processing application by using a function provided by the image processing application, for example, a function of opening an image or a function of introducing an image.

Step 1002: The electronic device receives a second user operation, and obtains first information based on the second user operation, where the first information indicates a painting style and/or a material type of a painting carrier. The second user operation is used to request to perform texture rendering on the first image requested for processing based on the first information.

In this step, the user may trigger, based on a user interface provided by the application, a function option of editing the first image (namely, an image to be processed). After receiving the user operation, the electronic device displays option information of the painting style and/or the material type of the painting carrier in response to the user operation. After the user completes a selection operation of the painting style and/or the material type of the painting carrier based on the option information, the electronic device may obtain the first information based on a received user operation used to select the option information.

For a specific implementation of this step, refer to step 701.

Step 1003: The electronic device determines a texture image corresponding to the requested painting style and/or material type.

For a specific implementation of this step, refer to step 702.

Step 1004: The electronic device performs blending processing on a layer at which the first image requested for processing is located and a layer at which the texture image is located.

Optionally, after determining the texture image corresponding to the painting style or the material type selected by the user, the electronic device directly proceeds to step 1004, that is, immediately performs a blending processing operation.

For a specific implementation of this step, refer to the principle shown in FIG. 5.

Based on the image processing methods provided in the foregoing embodiments of this application, texture effect processing on an image can be implemented, thereby improving a realism level of a painting effect.

For example, FIG. 11 is a comparison diagram of an image before texture rendering and an image obtained through texture rendering according to the methods provided in embodiments of this application. It can be seen that, after texture rendering is performed on the image of the user by using the image processing methods provided in embodiments of this application, in comparison with the image of the user before texture rendering, an effect of the image of the user is closer to an effect obtained by painting on a real paper with a specific texture.

In addition, in the image processing methods provided in embodiments of this application, a texture image is used to implement a texture effect of an image, and modeling does not need to be performed for the texture. This can reduce resource overheads of image processing.

In addition, the texture image in embodiments of this application may be obtained by photographing a painting material and performing image processing on an image obtained through photographing. In comparison with extracting a paper texture by using a professional extraction device (for example, a fingerprint sensor), this can reduce costs.

In addition, based on a feature of distinctiveness or uniqueness of a paper texture, a texture image is obtained in a manner provided in embodiments of this application, so that a texture image with a unique texture can be obtained. After the image of the user is processed based on the texture image, the image of the user also has the unique texture feature, thereby achieving an anti-counterfeiting objective.

An embodiment of this application further provides a computer-readable storage medium. The computer-readable storage medium is configured to store a computer program. When the computer program is executed by a computer, the computer may implement the methods provided in the foregoing method embodiments.

An embodiment of this application further provides a computer program product. The computer program product is configured to store a computer program. When the computer program is executed by a computer, the computer may implement the methods provided in the foregoing method embodiments.

An embodiment of this application further provides a chip, including a processor. The processor is coupled to a memory, and is configured to invoke a program in the memory, so that the chip implements the methods provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An image processing method, applied to an electronic device, wherein the method comprises:
starting an application, wherein the application comprises a painting application or an image editing application;
obtaining painting information selected by a user, wherein the painting information comprises information about a painting style or a material type of a painting carrier; and
obtaining a painting operation of the user, performing texture rendering on a currently painted first image based on the painting information, generating a second image, and displaying the second image, wherein the second image has a texture painting effect that matches the painting information selected by the user.

2. The image processing method according to claim 1, wherein obtaining the painting operation of the user, performing texture rendering on the currently painted first image based on the painting information, generating the second image, and displaying the second image comprises:
in a painting process of the user, displaying the second image in real time following the painting operation of the user.

3. The image processing method according to claim 1 or 2, wherein generating the second image comprises:
performing blending processing on the first image and one or more texture images to generate the second image, wherein the one or more texture images correspond to the painting information selected by the user.

4. The image processing method according to any one of claims 1 to 3, wherein the one or more texture images are generated based on a texture corresponding to the painting style or the material type of the painting carrier, and the one or more texture images present the texture corresponding to the painting style or the material type of the painting carrier in a blending manner.

5. The image processing method according to claim 4, wherein the one or more texture images present different texture features of a same painting style or painting carrier, and the texture feature comprises one or more of the following: a texture shape, a texture size, a texture depth, a dark part contour feature, a bright part contour feature, a light color contour feature, or an effect presented based on a pigment adsorption capability.

6. The image processing method according to claim 5, wherein a texture feature of the effect presented based on the pigment adsorption capability is related to depression of a presented texture.

7. The image processing method according to any one of claims 4 to 6, wherein the one or more texture images comprise one or more of the following:
a texture layer image, presenting a texture shape, a texture size, and a texture depth under a diffuse light condition;
a gloss layer image, presenting a texture contour under a specific-direction light condition, wherein a dark part contour is eliminated and a bright part contour is highlighted in the texture contour;
a gloss absorption layer image, presenting the texture contour under the specific-direction light condition, wherein a dark color part is eliminated and a light color part is highlighted in the texture contour;
a color deposition layer image, presenting the effect presented based on the pigment adsorption capability; or
a shadow layer image, presenting the texture contour under the specific-direction light condition, wherein the bright part contour is eliminated and the dark part contour is highlighted in the texture contour.

8. The image processing method according to any one of claims 1 to 7, wherein the painting information further comprises texture feature information, and the texture feature information comprises texture granularity densities and/or texture granularity sizes of the corresponding one or more texture images.

9. The image processing method according to claim 8, wherein the method further comprises:
adjusting, based on texture feature information selected by the user, pattern sizes of the one or more texture images corresponding to the painting information.

10. The image processing method according to any one of claims 1 to 9, wherein the texture feature information comprises information about one or more of the following: a texture shape, a texture size, a texture depth, a dark part contour feature, a bright part contour feature, a light color contour feature, or an effect presented based on a pigment adsorption capability.

11. The image processing method according to claim 10, wherein the texture layer image is obtained by processing a third image and a background image in a first blending mode; or the gloss layer image is obtained by processing a fourth image and the background image in a second blending mode; or the gloss absorption layer image is obtained by processing the fourth image and the background image in a third blending mode; or the color deposition layer image is obtained by processing a fifth image and the background image in a fourth blending mode; or the shadow layer image is obtained by processing the fourth image and the background image in a fifth blending mode, wherein
the third image is an image of a texture corresponding to the painting information under the diffuse light condition, the fourth image is an image of the texture corresponding to the painting information under the specific-direction light condition, and the fifth image is an image of a texture of the same painting carrier after being dyed.

12. The image processing method according to claim 11, wherein the first blending mode is a dark color mode, or the second blending mode is a color screening mode, or the third blending mode is a light color mode, or the fourth blending mode is a color burn blending mode, or the fifth blending mode is a multiply blending mode.

13. The image processing method according to any one of claims 1 to 12, wherein the method further comprises:
presenting a corresponding painting carrier based on the painting information selected by the user, wherein the corresponding painting carrier is obtained by blending the corresponding one or more texture images.

14. The image processing method according to claim 13, wherein the method further comprises:
displaying a background image corresponding to the painting carrier in an interface of the first application.

15. The image processing method according to any one of claims 1 to 14, wherein the first image comprises:
an image currently presented in the interface of the application; or
a background image presented in the interface of the application.

16. The image processing method according to any one of claims 1 to 15, wherein the method further comprises:
displaying the first edit control in an interface for creating a painting; or
displaying the first edit control in a function option interface for setting a texture; or
displaying the first edit control in a function option interface for previewing a current image.

17. The image processing method according to any one of claims 1 to 16, wherein the method further comprises:
receiving a second operation of the user on the first edit control, canceling texture rendering on the first image, and restoring image painting.

18. The image processing method according to any one of claims 1 to 17, wherein the method further comprises:
performing blending processing on the first image and a texture image, wherein a blending processing mode comprises one or more of the following: the dark color mode, the color screening mode, the light color mode, the color burn blending mode, or the multiply blending mode.

19. The image processing method according to any one of claims 1 to 18, wherein performing texture rendering on the first image comprises:
processing values of pixels at same locations in the one or more texture images and the first image in a specified blending mode, to obtain a value of a pixel at a same location in the second image.

20. The image processing method according to claim 19, wherein the blending mode is associated with a painting style indicated by the first information, or the blending mode is associated with a material type indicated by the first information.

21. The image processing method according to any one of claims 1 to 20, wherein the first information further indicates texture feature information, and the texture feature information indicates a texture granularity density and/or a texture granularity size; and
the method further comprises:
determining, based on the texture feature information indicated by the first information, a brush parameter corresponding to the texture feature information; and
setting a brush based on the brush parameter.

22. The image processing method according to claim 21, wherein the brush parameter comprises one or more of a brush shape and a brush material, and granularity fineness of the brush material is associated with texture granularity fineness corresponding to the texture feature information indicated by the first information.

23. The image processing method according to any one of claims 1 to 22, wherein the painting style comprises one or more of the following: an ink wash painting style, a watercolor painting style, an oil painting style, a paper style, a silk style, a cloth texture style, a leather texture style, a printmaking style, a mineral pigment painting style, or a metal style.

24. The image processing method according to any one of claims 1 to 23, wherein the material type of the painting carrier comprises one or more of the following: paper, a canvas, or a painting board.

25. An apparatus, comprising a unit or a module configured to perform the method according to any one of claims 1 to 24.

26. An apparatus, comprising one or more processors, wherein the one or more processors are configured to perform the method according to any one of claims 1 to 24.

27. A readable storage medium, wherein the readable storage medium comprises a program, and when the program is run on an apparatus, the apparatus is enabled to perform the method according to any one of claims 1 to 24.

28. A chip system, wherein the chip system comprises at least one chip and a memory, and the at least one chip is configured to read and execute a program stored in the memory, to implement the method according to any one of claims 1 to 24.

29. A computer program product, wherein the computer program product comprises a computer program, and when the computer program is executed by a processor, the method according to any one of claims 1 to 24 is implemented.
